Europäisches Patentamt

European Patent Office

Office européen des brevets

(19)

(11) EP 0 709 719 A1

(12) EUROPEAN PATENT APPLICATION

(43) Date of publication:
01.05.1996 Bulletin 1996/18

(51) Int. Cl.$^6$: G02F 1/17, G02F 1/19, G09F 9/37

(21) Application number: 95115166.1

(22) Date of filing: 26.09.1995

(84) Designated Contracting States:
DE FR GB IT

(30) Priority: 30.09.1994 JP 238271/94
30.09.1994 JP 238276/94
31.10.1994 JP 267891/94

(71) Applicants:
• FUJIKURA LTD.
Koto-ku Tokyo (JP)
• FUJIKURA KASEI CO., LTD.
Itabashi-Ku Tokyo-To (JP)

(72) Inventors:
• Anzai, Hidenobu
Itabashi-ku, Tokyo (JP)
• Edamura, Kazuya,
Fujikura Kasei Co., Ltd.
Tokyo (JP)
• Akashi, Kazuya
Inbagun, Chiba-ken (JP)
• Otsubo, Yasufumi
Chiba-shi, Chiba-ken (JP)

(74) Representative: Grünecker, Kinkeldey,
Stockmair & Schwanhäusser
Anwaltssozietät
Maximilianstrasse 58
D-80538 München (DE)

(54) Electrically controlled, reflection type display device

(57) A color display device electrically driven to vary colors and images on its display surface. The color display device comprises a display cell (3) having first and second surfaces (1a, 1b) disposed in opposed relation to each other, at least of a portion of the first surface (1a) being transparent and the second surface (1b) being opaque. A transparent reference electrode layer (5) is formed on the first surface (1a) and a transparent facing electrode (6) is formed on the second surface (1b). Between the reference and facing electrode layers (5, 6) there is packed an electro-optical fluid composition (4) produced by dispersing solid particles (42) with an electric alignment effect in an electrical insulating medium (41). The solid particles (42) respond to an electric field to take a transparent state. The color of the solid particles (42) is made to be different from the colors of the opaque surface (1b) and the electrical insulating medium.

FIG. 1A

FIG. 1B

**Description**

Background of the Invention

[Field of the Invention]

The present invention relates to a display device capable of dynamic display using a electro-optical fluid composition with a electric alignment effect (hereinafter referred to as a EA fluid), ad more particularly to a reflection type color display device capable of electrically controlling the color and image on its screen.

[Description of the Related Art]

As typical color display devices (or panels) which can change the color and image on its screen, there have been known a sign display device, neon display device, CRT display device, LED display device, liquid crystal display device, plasma display device, electro-luminescence display device, projection type display device, and the like. There is, however, a problem which arises with such conventional display devices, in that the visibility deteriorates because of their unsatisfactory luminance, which makes the use difficult in a brightly light place such as outdoors. One approach to resolve such visibility problem is to adopt a reflector type display device such as a rotary plate type display device and reversal plate type display device. The rotary plate type display device is designed so that a image-drawn disc-like or belt-like rotary plate is exposed through a dynamic display window while being continuously or intermittently driven to change the image or picture. On the other hand, the reversal plate type display device is made such that small-piece-like reversal plates having different image portions and colors are arranged on a screen and individually controlled to be successively reversed to accomplish a dynamic display. These conventional reflector type display devices have a disadvantage in that the image movement is mechanical based, with significant limitation imposed on the number of pictures displayed, their structures become complicated and tend to be easily broken down and cause the generation of noises.

Summary of the Invention

It is therefore a object of the present invention to provide a reflection type color display device which is capable of electrically controlling the color and image on its screen.

One feature of the present invention is the utilization of a electro-optical fluid composition (an EA fluid). This composition is a fluid produced by, for example, dispersing solid particles in a electrical insulating medium, and in response to application of an electric field thereto, the solid particles establish dielectric polarization, and align with each other and arranged in the field direction due to the electrostatic attractive force caused by the dielectric polarization, thus producing chain bodies (configurations). In addition, some of solid particles have electrophoretic properties, and in response to the application of an electric field thereto, are electrophoretically moved toward the electrode sections to be arranged and oriented to take an arranged massive structure. The fact that the arrangement and orientation of particles take place under a electric field is called a electric alignment effect, and the solid particles which take such an electric alignment effect are referred to as electric alignment particles (EA particles). The operational principle of the EA fluid will become apparent as the description proceeds.

According to the present invention, there is provided a color display device comprising a cell, the cell including: first and second surfaces disposed in opposed relation to each other, at least a portion of the first surface being transparent to make up a transparent section and the second surface being opaque to make up an opaque section; first and second transparent electrode layers formed on the transparent section and the opaque section, respectively; and an electro-optical fluid composition produced by putting solid particles with a electric alignment effect in an electrical insulating medium and packed in between the first and second transparent electrode layers.

In addition, one or more cells are placed on the transparent section of the first-mentioned cell, each of the second-mentioned cells having transparent surfaces disposed in opposed relation to each other, the second-mentioned cell including: first and second transparent electrode layers formed on the transparent surfaces, respectively; and an electro-optical fluid composition produced by putting solid particles with an electric alignment effect in an electrical insulating medium and packed in between the first and second transparent electrode layers.

Furthermore, according to the present invention, there is provided a color display device comprising at least one color display section composed of a one-surface transparent cell having a first transparent surface and a second opaque surface, the first and second surfaces being spaced from each other and disposed in opposed relation to each other, the one-surface transparent cell including: a transparent reference electrode layer formed on one of the first and second surfaces; a transparent facing electrode layer formed on the other of the first and second surfaces so as to be in opposed relation to the reference electrode layer; electric field applying means for applying an electric field to between the reference electrode layer and the facing electrode layer; and an electro-optical fluid composition produced by putting solid particles with an electric alignment effect in an electrical insulating medium and packed in between the reference electrode layer and the facing electrode layer, the solid particles being responsive to the electric field from the electric field applying means so that the electro-optical fluid composition takes a transparent state and an opaque state; wherein the solid particles are different in color from at least one of the opaque surface and the electrical insulating medium.

In addition, one or more double-surface transparent cells are placed on the transparent surface of the one-surface transparent cell, each of the double-surface transparent cells having transparent surfaces disposed in opposed relation to each other, the double-surface transparent cell including: transparent reference and facing electrode layers formed on the transparent surfaces, respectively; electric field applying means for applying an electric field to between the reference and facing electrode layers of the double-surface transparent cell; and an electro-optical fluid composition produced by putting solid particles with an electric alignment effect in an electrical insulating medium and packed in between the first and second transparent electrode layers, the solid particles being responsive to the electric field from the electric field applying means so that the electro-optical fluid composition takes a transparent state and an opaque state, wherein the solid particles of at least one of the one-surface transparent cell and the double-surface transparent cell are different in color from the opaque surface of the one-surface transparent cell.

Still further, according to the present invention, there is provided a color display device comprising a picture element having at least two or more cells arranged in parallel to each other on one plane to be adjacent to each other, each of the cells including: first and second surfaces disposed in opposed relation to each other, the first surface being composed of a transparent plate to make a portion of a display surface of the picture element and the second surface composed of an opaque plate colored to have a color different from black and further different from colors of the other cells; a transparent reference electrode formed on one of the first and second surfaces; a transparent facing electrode formed on the other of the first and second surfaces so as to be in opposed relation to the reference electrode; electric field applying means for applying an electric field to between the reference electrode and the facing electrode; and an electro-optical fluid composition produced by putting solid particles with an electric alignment effect in an electrical insulating medium and packed in between the reference electrode and the facing electrode, the solid particles being responsive to the electric field from the electric field applying means and colored to have a color different from black.

Moreover, according to the present invention, there is provided a color display device comprising a picture element having at least two or more cells placed in piles to construct a laminated structure, one of the cells being a one-surface transparent cell having first and second surfaces disposed in opposed relation to each other, the first surface being composed of a transparent plate and the second surface composed of a colored opaque plate, and other cells being double-surface transparent cells each having first and second transparent surfaces disposed in opposed relation to each other, the double-surface cells being placed on the one-surface cell, each of the cells including: a transparent reference electrode formed on one of the first and second surfaces; a transparent facing electrode formed on the other of the first and second surfaces so as to be in opposed relation to the reference electrode layer; electric field applying means for applying an electric field in between the reference electrode and the facing electrode; and an electro-optical fluid composition produced by putting solid particles with a electric alignment effect in a electrical insulating medium and packed in between the reference electrode and the facing electrode, wherein the solid particles of the electro-optical fluid composition within the uppermost cell are colored in black and the solid particles of the electro-optical fluid composition within the cells other than the uppermost cell are colored to have colors different from each other and different from black, a color of the colored opaque plate being different from the colors of the solid particles of the electro-optical fluid compositions.

Brief Description of the Drawings

The object and features of the present invention will become more readily apparent from the following detailed description of the preferred embodiments taken in conjunction with the accompanying drawings in which:

Fig. 1A is a cross-sectional view showing a color display device according to a first embodiment of the present invention;
Fig. 1B is a plan view showing the color display device according to the first embodiment of the present invention;
Fig. 2 is a cross-sectional view showing one example of a solid particle (an EA particle) in an EA fluid to be applicable to a color display device according to the present invention;
Fig. 3 is a side elevational view showing an alignment configuration of EA particles in an EA fluid;
Fig. 4 is a side elevational view showing an alignment principle of EA particles in an EA fluid;
Fig. 5 is a cross-sectional view showing one example of a EA particle colored;
Fig. 6 is a cross-sectional view showing a color display device according to a second embodiment of the present invention;
Fig. 7 is a plan view separately showing a cell of a color display device according to a third embodiment of the present invention;

Fig. 8 is a perspective view showing a structure of electrode layers of a color display device according to a fourth embodiment of the present invention;

Fig. 9 is a front elevational view of a color display device serving as a transportation information display device according to a fifth embodiment of the present invention;

Fig. 10 is an enlarged view showing a portion of Fig. 9 display device;

Fig. 11 is a cross-sectional view showing a structure of a color display section of the color display device according to the fifth embodiment of the present invention;

Fig. 12 is a cross-sectional view showing a structure of EA particles in an EA fluid;

Fig. 13 is a front elevational view showing another structure of a color display section in the fifth embodiment;

Fig. 14A is a cross-sectional view showing a color display section of a color display device according to a sixth embodiment of the present invention;

Fig. 14B is a front elevational view showing the Fig. 14A color display device;

Fig. 15A is a front elevational view showing a large-sized display device according to a seventh embodiment of the present invention;

Fig. 15B is an enlarged view showing a portion of the Fig. 15A display device, indicated by character A circled;

Fig. 16A is a plan view showing an picture element to be used in the Figs. 15A and 15B display device;

Fig. 16B is a cross-sectional view taken along a line X-X' of Fig. 16A;

Fig. 17A is a plan view showing one mode of the Fig. 16A picture element;

Fig. 17B is a cross-sectional view taken along a line X-X' of Fig. 17A;

Fig. 18 is a cross-sectional view showing one picture element of a large-sized display device according to a eighth embodiment of the present invention, including a circuit arrangement therefor;

Fig. 19 is a cross-sectional view showing one operational mode of the picture element in the eighth embodiment of the present invention;

Fig. 20 is an illustration of a electrode structure of a picture element cell according to a ninth embodiment of the present invention;

Fig. 21 is a cross-sectional view showing one operational mode of the picture element according to the ninth embodiment of the present invention;

Figs. 22A and 22B are explanatory illustrations for the operational principle of an EA fluid;

Fig. 23 is a graphic illustration of the variation of the transmitted light intensity in an EA fluid in accordance with the changes of the EA particle concentration and the strength of the electric field to be applied for an EA fluid dispersed in an insulating medium with a kinematic viscosity of 10 cSt;

Fig. 24 is a graphic illustration of the variation of the transmitted light intensity in an EA fluid in accordance with the changes of the EA particle concentration and the strength of the electric field to be applied for an EA fluid dispersed in a insulating medium with a kinematic viscosity of 50 cSt;

Fig. 25 is a graphic illustration of the variation of the transmitted light intensity in an EA fluid in accordance with the changes of the EA particle concentration and the strength of the electric field to be applied for an EA fluid dispersed in an insulating medium with a kinematic viscosity of 100 cSt;

Fig. 26 is a graphic illustration of the variation of the transmitted light intensity in an EA fluid in accordance with the changes of the kinematic viscosity of an electrical insulating medium and the strength of the electric field to be applied in the case that the EA particle concentration is fixed to 5.0% by weight;

Fig. 27 is a graphic illustration of the variation of the transmitted light intensity in an EA fluid in accordance with the changes of the kinematic viscosity of an electrical insulating medium and the strength of the electric field to be applied in the case that the EA particle concentration is fixed to 7.5% by weight;

Fig. 28 is a graphic illustration of the measurement results of the electric field responsibility in the present invention;

Fig. 29 is a graphic illustration of transmitted light spectrums at no application of an electric field and at application of an electric field to an EA fluid in the present invention;

Fig. 30 is a graphic illustration of transmitted light spectrums of an electrical insulating medium in the present invention;

Fig. 31 is a graphic illustration of transmitted light spectrums of an EA fluid in which yellow-colored EA particles are dispersed in a blue-colored electrical insulating medium, at no application of an electric field and at application of an electric field to an EA fluid; and

Fig. 32 is a graphic illustration of transmitted light spectrums at no application of an electric field to EA fluid and at application of an electric field between a reference electrode and a facing electrode, and at application of an electric field between the reference electrode and an adjacent electrode in a ninth embodiment of the present invention.

Description of the Preferred Embodiment

First Embodiment

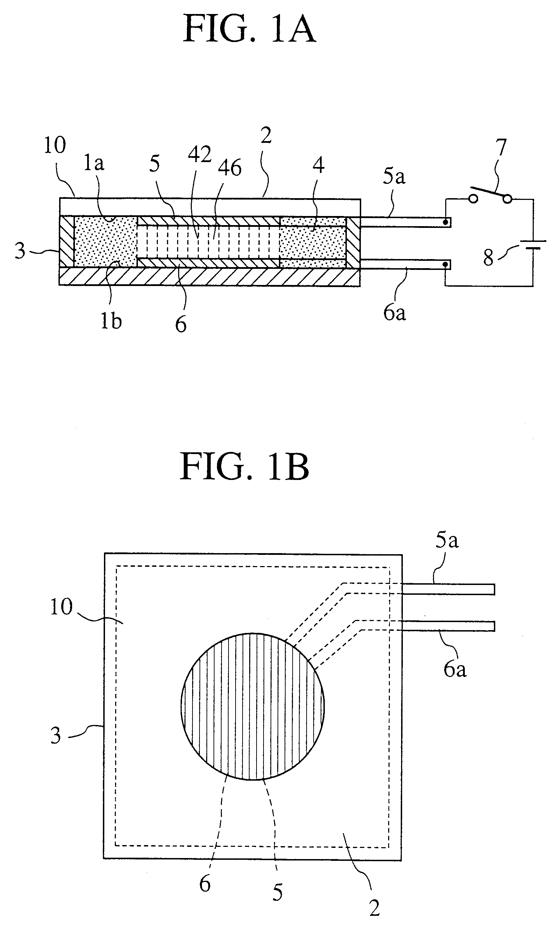

A basic embodiment of the present invention will be described hereinbelow with reference to Figs. 1A and 1B. In Fig. 1A, a color display device has a display section 10 composed of a cell 3 including two surfaces 1a, 1b disposed in opposed relation to each other. At least a portion of one (1a) of these two surfaces 1a, and 1b is made of a transparent material, and a portion of the other (1b) facing the one surface (1a) is made of an opaque material. On the transparent and opaque sections there are respectively placed electrode layers 5, 6 transparent and disposed in opposed relation to each other. The foregoing EA fluid, designated by a reference numeral 4, is put between the opposed electrode layers 5, 6. Solid particles 42 which take the aforementioned electric alignment effect (hereinafter referred to as EA particles), included in the EA fluid 4, is designed to be different in color from the opaque section 1b, or the EA particles 42 is made to be different in color from an electrical insulating medium included in the EA fluid 4. In this embodiment, the EA fluid 4 is white in color at the time of non-application of an electric field thereto, and the opaque section 1b is colored in red.

As shown in Figs. 1A and 1B, the opposed electrode layers 5, 6 are connected to electric wires (outgoing lines) 5a, 5b, respectively, which in turn, are led from the cell 3 to be coupled in series to a switch 7 and a power supply 8 to make a circuit.

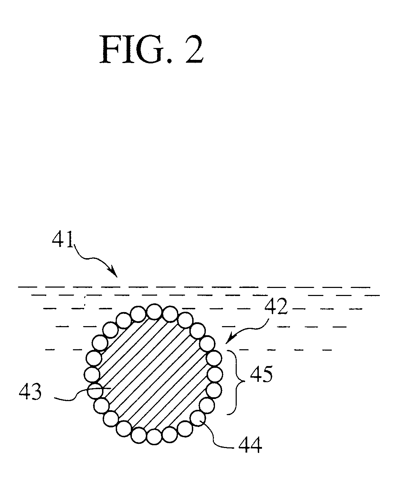

In this EA fluid 4, as shown in Fig. 2, white EA particles 42 are uniformly dispersed in an electrical insulating medium 41 which is colorless and transparent. The EA particle 42 comprises a core body 43 made of a polymer compound and a surface-layer 45 made up of inorganic EA fine particles 44. In this embodiment, the electrical insulating medium 41 is made of a colorless and transparent silicone oil, the organic high-molecular compound for forming the core body 43 is polyacrylate, and the surface-layer 5 producing inorganic EA particles 44 is white titanium hydroxide (see the preparation examples below). The EA fluid 4 appears to have a milky color due to reflected light from the titanium hydroxide constituting the surface layer 45 of the EA particle (inorganic and organic composite particle) 42.

In the color display device, when the switch 7 is in the off state, the transparent section 1a of the display section 10 wholly appears to be uniformly white in color. On the other hand, when the switch 7 is set to the on state so that an electric field is applied to between the opposed electrode layers 5, 6, in a section 2 in which the electrode layer 5 is formed, the EA particles 42 of the EA fluid 4 are coordinate-linked with each other in the electric field direction to form chain bodies 46 so that light can pass through gaps between the formed chain bodies 46, for which reason the EA fluid 4 becomes transparent in an direction perpendicular to the transparent section 1a surface, thus allowing the color (red) of the opaque section 1b to appear. That is, in this color display device, the color of the opposed electrode layer 5, 6 sections (having circular configurations) of the display section 10 reversibly varies between white and red, with the result that a dynamic display becomes possible, that is, a red circle appears and disappears in a white background. In a state where the switch turns into the on state, the electric wires 5a, 6a within the cell 3 are not in opposed relation to each other and are separated from each other, which does not allow the EA fluid around the wire 5a, 6a portions to become transparent due to the effect of the electric field.

In the color display device according to the first embodiment, the EA particles 42 are white in color, the electrical insulating medium 41 is colorless and transparent, and the opaque section 1b is red in color, by which arrangement the color display is made reversibly between white and red. Whereas, if the EA particles 42 are colored in a different color, that color appears at the time of non-application of an electric field thereto. In addition, the EA particles 42 and the electrical insulating medium 41 are made to have different colors, the reversible color display is similarly possible. For instance, in a case where the electrical insulating medium 41 is colored in yellow and the opaque section 1b is white in color, the color (for example, green) of the EA particles 42 appears while no application of an electric field takes place. Whereas, in response to the application of an electric field, the green color disappears and changes into light greenish yellow.

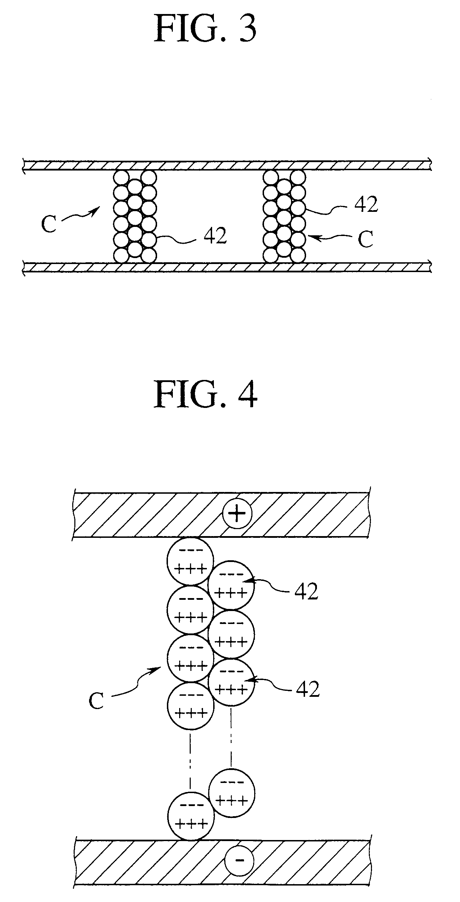

Although in the present invention the inorganic and organic composite particles 42 turn into single-chain configurations which in turn, are arranged in parallel to each other when an electric field is applied thereto, if the quantity of the inorganic and organic composite particles 42 increases to exceed 1% by weight, a plurality of chain configurations are joined with each other to organize columns C as shown in Fig. 3. In each column C, the inorganic and organic composite particles 42 of the adjacent chain configurations are longitudinally shifted by one from each other. As to this phenomenon, the inventors assume that the inorganic and organic composite particles 42, dielectric-polarized into + pole portions and - pole portions as shown in Fig. 4, becomes more stable in energy when being alternately adjacent to each other due to the attraction between the + pole portions and the - pole portions.

Accordingly, in cases where the content of the inorganic and organic composite particles 42 is large, a number of columns C are produced between the electrodes, by which production the transmitted light intensity increases. In this case, since a number of inorganic and organic composite particles 42 are grouped into a plurality of columns C, the separation between the adjacent columns C results in being large, which serves to increase the transmitted light intensity.

The reason why the diameters of the inorganic and organic composite particles 42 are determined to be in the range of 0.1 to 500 μm, more preferably 5 to 200 μm, is that the inorganic and organic composite particles 42 function as light scattering particles or light reflection particles. As well known, the wavelength of the visible light is in the range of 380 to 780 nm, that is, 0.38 to 0.78 µm, and for the light with such a wavelength being scattered or reflected for the transmitted light control purposes, the diameters of the inorganic and organic composite particles need to be at least more than 0.1 µm, more preferably over 5 µm. On the other hand, in a case where ultra-fine conductive particles having diameters smaller than the wavelengths of the visible light causing the Brownian motion, for example, having diameters of 5 nm to several tens nm (= 0.005 to 0.02 µm) are dispersed in the electrical insulating medium, the orientation of the ultra-fine particles is considered possible, while in this case the light transmission mechanism is totally different from that in the present invention, with the result that the ultra-fine particles are dispersed in a state with no electric field so as to completely permit the transmission of light and are oriented in a state with application of an electric field so as to scatter and attenuate light. That is, undesirable and totally different behaviors take place.

Furthermore, $TiBaO_4$ particles are considered as the foregoing ultra-fine conductive particles, while the specific gravity of $TiBaO_4$ is as great as being in the range between 4 and 6. Supposing that the $TiBaO_4$ particles are made to be large in diameter for the light reflecting purposes, they gravitationally sink for the difference in specific gravity from the electrical insulating medium, whereby difficulty is encountered to uniformly disperse the particles. In addition, for uniformly dispersing the $TiBaO_4$ particles in the electrical insulating medium, the electrical insulating medium needs to be large in specific gravity, while the electrical insulating medium with a specific gravity of approximately 4 to 6 does not exist in the world. On the other hand, the necessary specific gravity of the inorganic and organic composite particles in the present invention is readily adjustable to around 1.2, which allows the utilization of various kinds of electrical insulating media.

Secondly, considering a coloring aspect, difficulty is experienced to color the foregoing ultra-fine particles, and even assuming that the coloring is possible, the diameters of the particles are too small, for which reason the ultra-fine particles dispersed in the electrical insulating medium is impossible to visibly color. Accordingly, the use of the ultra-fine particles makes only the color of the electrical insulating medium appear. That is, the practicable coloring pattern is just one. For instance, only the variation between transparent red and opaque red is practicable.

Whereas, according to the present invention, for example, in a case where the medium 41 is designed to be transparent and red in color and the EA particles 42 are made of be white in color, the color variation between cloudy transparency and red transparency is practicable. Further, in a case where the medium 41 is colorless and transparent and the EA particles 42 are blue in color, the color variation between blue transparency and colorless transparency. Moreover, in the case that the medium 41 is red and the EA particles 42 are blue, the color variation takes place between purple transparency and red transparency. Still further, in the case that the medium 41 is light blue and the EA particles are yellow, the color variation takes place between opaque yellowish green and light blue transparency. In addition, taking notice of the portions to be colored, the coloring of both the core bodies 43 and surface-layers 45 of the inorganic and organic composite particles 42 and the electrical insulating medium 41 is possible, and the color variation is easy. The surface of the core body 43 of each of the inorganic and organic composite particles 42 is covered with an inorganic material 44, and since the color is exposed from the gaps between the inorganic materials, the color of the core body 43 colored is effectively reflexible relative to the color of the EA fluid.

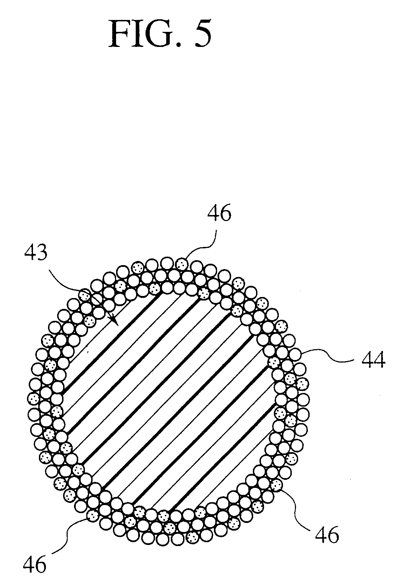

Furthermore, for coloring the surfaces of the inorganic and organic composite particles 42, a coloring inorganic pigment can be mixed evenly by a necessary quantity into the EA particles to be used in producing the inorganic and organic composite particles 42. In the structure of the inorganic and organic composite particles thus produced, as shown in Fig. 5, some of the inorganic particles 44 adhered to the periphery of the core body 43 are replaced with the coloring inorganic pigments 46. Thus, the coloring of the inorganic and organic composite particles 22 becomes possible.

Second Embodiment

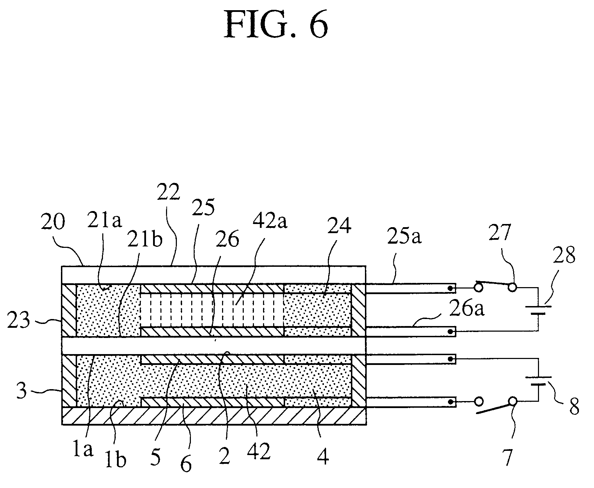

Fig. 6 is an illustration of a color display device according to a second embodiment of the present invention wherein a display section 20 is constructed with a combination of a one-side transparent cell 3 and a both-side transparent cell 23 placed in piles. In Fig. 6, in the display section 20, the cell 23 having transparent surfaces 21a, 21b arranged in opposed relation to each other is placed on a transparent section 1a of the cell 3 having a structure similar to that of the cell (one-surface transparent type cell) 3 in the foregoing first embodiment. Transparent electrode layers 25, 26 are formed on the transparent sections 21a, 21b of the cell 23 so as to take the opposed relation to each other. An EA fluid 24 containing EA particles 42a is packed into between these opposed electrode layers 25, 26. These particles 42a are made to be different in color from the EA particles 42 contained in the EA fluid 4 within the cell 3. In addition, the opposed electrodes layers 5, 6 and 25, 26 of the cells 3, 23 are independently coupled to a serial circuit of a switch 7 and power supply 8 and a serial circuit of a switch 27 and power supply 28, respectively.

In the second embodiment, the EA fluid 24 within the cell 23 is similar to that of the aforementioned first embodiment except that the surface layers of the EA particles 42a are made up of inorganic EA particles and blue pigments (see a preparation example 2). Accordingly, the EA fluid becomes blue in color in a state in which an electric field is applied thereto. On the other hand, the color of the EA particles 42 contained within the cell 3 is the same white as the first embodiment, which is different from the color of the EA particles 42a. The opaque section 1b is colored in red.

In the color display device according to the second embodiment, when the switch 27 is in the off state, irrespective of the on/off of the switch 7 the surface of the display section 20 appears to be blue, i.e., turns into the color taken while an electric field is not applied to the EA fluid 24 within the cell 23. Thereafter, when the switch 27 turns into the on state, a portion of the EA fluid 24 interposed between the opposed electrode layers 25, 26 is oriented to become transparent. If at this time the switch 7 is in the off state, the configurations of the opposed electrode layers 25, 26 appear to be white. That is, a white circle appears in a blue background.

Subsequently, when the switch 7 takes the on state while the switch 27 remains as it is, a portion of the EA fluid 4 interposed between the opposed electrode layers 5, 6 within the cell 3 is also oriented to become transparent. Accordingly, the white circle portion turns into red so that a red circular image appears in the blue background. Thus, an image changeable among three colors is obtainable with the electric fields to be applied thereto being appropriately and independently on/off-controlled.

Although in the second embodiment two cells are used in piles, one or more cells each having transparent opposed surfaces can also be placed on the transparent section 21a of the cell 23. At this case, the number of colors obtainable for variation is the total number of cells plus one. Further, although in the second embodiment the display section of each cell is equipped with a pair of opposed electrode layers, if two or more pairs of opposed electrode layers are provided within the same cell and wiring is made to each pair of opposed electrode layers so that the on/off control of the electric field is possible, the portion between each pair of opposed electrode layers is individually changeable in color, whereby it is possible to widely change the shape and color of the image to be displayed.

Third Embodiment

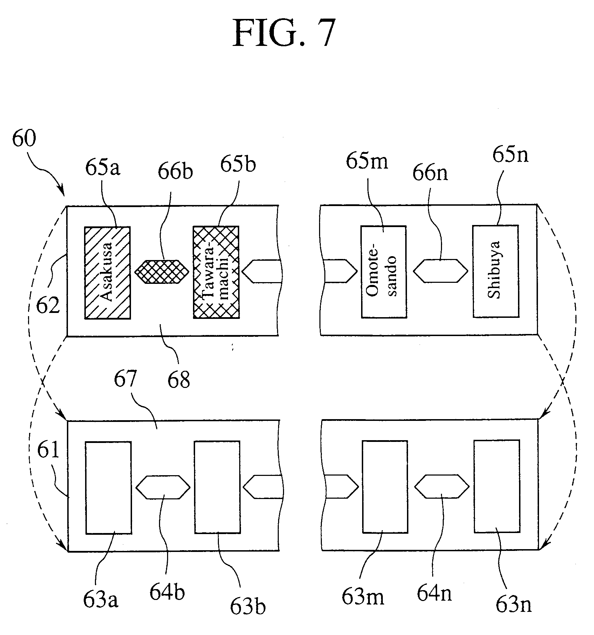

Fig. 7 is a plan view separately showing a cell of a color display device according to a third embodiment of the present invention, which is applied to the display of train stations. This color display device 60 is constructed such that an elongated rectangular both-surface transparent cell 62 is placed in piles on a transparent section of a similarly configured one-surface transparent cell 61. One surface of the cell 61 is entirely transparent and the other surface thereof is entirely opaque. This opaque section is colored in bitter orange. In this cell 61, there are formed vertical nameplate-like opposed electrode sets 63a, 63b, ..., 63m, 63n arranged longitudinally for displaying names of stopping stations from the starting station to the terminal station, and further opposed electrode sets 64b, ..., 64n having double-arrow configurations and respectively disposed among the opposed electrode sets 63a, 63b, ..., 63m, 63n. These opposed electrode sets are coupled through individual switches to a power supply, not shown.

This one-surface transparent cell 61 is filled with an EA fluid similar to that in the foregoing first embodiment. However, the surface layers of EA particles are made of inorganic EA particles and green pigments, with the result that the color of the EA fluid is green while an electric field is not applied thereto. The both-surface transparent cell 62 is constructed in the same way as the one-surface transparent cell 61, and when being piled up on the one-surface transparent cell 61, its nameplate-like opposed electrode sets 65a, 65b, ..., 65m, 65n and double-arrow-like opposed electrode sets 66b, ..., 66n are made to be coincident in position with the corresponding opposed electrode sets of the one-surface transparent cell 61. In the transparent plate being a display surface of the double-surface transparent cell 61, the names of the stopping stations are written on the nameplate-like opposed electrodes, respectively. In addition, a background section of the transparent plate, which has no electrode, is coated to be white in color and opaque. The double-surface transparent cell 62 is filled with a white EA fluid similar to that in the first embodiment. Accordingly, the color of this EA fluid is white while an electric field is not applied thereto.

The color display device according to the third embodiment operates as follows. When the train is in the waiting state at the starting station, only the nameplate 65a of the double-surface transparent cell 62, indicative of the starting station, lightens (due to voltage application). Consequently, the opposed electrode section becomes transparent so that the color of the EA fluid within the one-surface transparent cell 61 appears, that is, so that a green display takes place. On the other station nameplates, only the station names is visible against the white background. The arrows are white which is the same color as the background section 68, and hence hardly visible. Near the departure, the staring station nameplate 63a of the one-surface transparent cell 61 lightens, more preferably goes on and off. Whereupon, the starting station nameplate 63a section also becomes transparent, and the color of the starting station nameplate turns into the color (orange) of the opaque section, thereby notifying people of the departure. After the departure, the starting station nameplate 63a of the one-surface transparent 61 turns off to come into the green display. Simultaneously, the arrows 64a, 66b of both the one-surface transparent cell 61 and double-surface transparent cell 62, adjacent to the starting station nameplate, and the next stopping station name plates 63b, 65b light up, whereby the next stopping station nameplates and the arrows immediately before these nameplates light up in green, thus indicating the traveling direction of the train. Thereafter, the same operation is repeatedly conducted in accordance with the running of the train. Through the change-over operation of the switches, non-arrival stations are displayed in while as they are, the arrival stations are displayed in green, and the point (arrow) that the train is currently passing through, and the next station are displayed in orange. When the train returns toward the starting station, the similar operation is effected in the reversal direction, thus accomplishing the same display.

## Fourth Embodiment

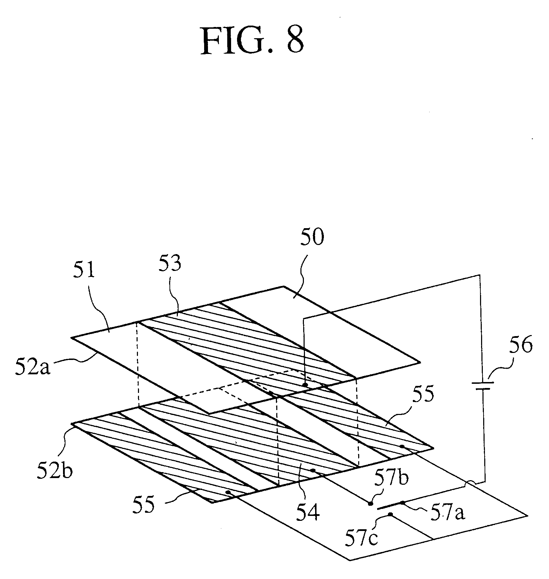

Fig. 8 is a perspective view showing a structure of electrode layers of a color display device according to a fourth embodiment of the present invention, the electrode layers being in non-opposed relation to each other. In Fig. 8, in a display section 50 (51) of the color display device, a transparent reference electrode layer 53 is formed on a portion of one (52a) of opposed surfaces of a cell, and a facing electrode layer 54 is formed on a portion of the other surface 52b which is in opposed relation to the reference electrode layer 53. One or more non-facing electrode layers 55 are formed on sections of the surface 52b including the facing electrode layer 54, which sections are not in opposed relation to the reference electrode layer 53. An electric wire is drawn out from the reference electrode layer 53 and connected through a power supply 56 to an input terminal 57a of a change-over switch. In addition, a wire is drawn out from the facing electrode layer 54 and connected one output terminal 57b of the change-over switch. Moreover, electric wires are drawn out from the non-facing electrode layers 55 and connected to the other output terminal 57c of the change-over switch. An EA fluid colored is packed in between both the surfaces 52a, 52b of the display section 50.

In operation, when in the change-over switch the input terminal 57a is connected to the one output terminal 57b, a electric field is established between the reference electrode layer 53 and the facing electrode layer 54 so that the EA fluid therebetween forms chain bodies in directions perpendicular to the surface and becomes transparent. Subsequently, when the switch is changed to establish the connection between the input terminal 57a and the other output terminal 57c, the electric field disappears between the reference electrode layer 53 and the facing electrode layer 54 and an electric field takes place between the reference electrode layer 53 and the non-facing electrode layers 55, with the result that the EA particles rapidly change from the chain bodies normal to the surface into chain bodies inclined from the surface between the reference electrode layer 53 and the non-facing electrode layers 55, whereby light becomes difficult to vertically transmit through the cell to make the EA fluid opaque. With this arrangement, the color display device is quickly responsive to the on/off control of the electric field to repeatedly take the transparent and opaque conditions.

The selection of the color of the EA fluid in this color display device can arbitrarily be made, and this electrode layer structure is usable for both the one-surface transparent cell and double-surface transparent cell and also applicable to a portion or all of the piled cells. In addition, it can also be applied to a portion of the cell display section.

## Fifth Embodiment

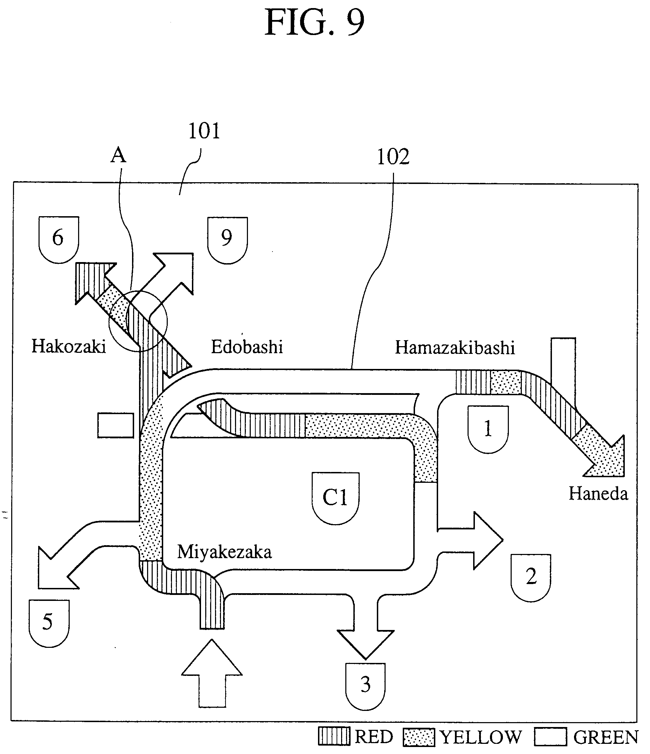

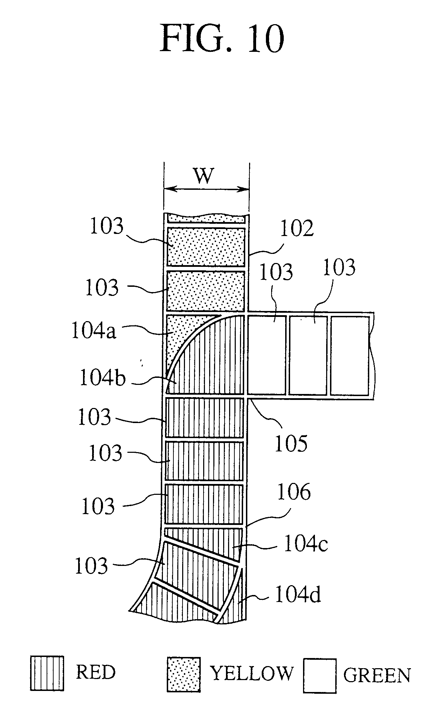

A fifth embodiment of the present invention will be described hereinbelow with reference to Figs. 9 to 11. The fifth embodiment relates to a color display device serving as an information display device such as a transportation information display device. Fig. 9 is a illustration of one example of graphic information display surfaces of the color display device according to the fifth embodiment. Roadways in a road map 102 of the information displace surface 101 are made up of a number of color display sections. A portion of the information display surface, indicated by reference character A, is enlarged and shown in Fig. 10. In Fig. 10, the roadways having a width of W are transversely divided into a number of portions which are respectively constructed with color display sections (103, 104a to 104d in the illustration) successively arranged. The color display sections 103 are chiefly for expressing straight-traveling portions of the roadways, and have rectangular configurations one side of which is equal to the width W of the roadways, the side normal to the one side being equal to the longitudinal unit length in a digital display of traffic jam information. On the other hand, the color display sections 104a to 104d are deformed and representative of crossroads 105, junctions 106, curvatures (not shown) and so on, and are configured to express the advancing directions for motor vehicles.

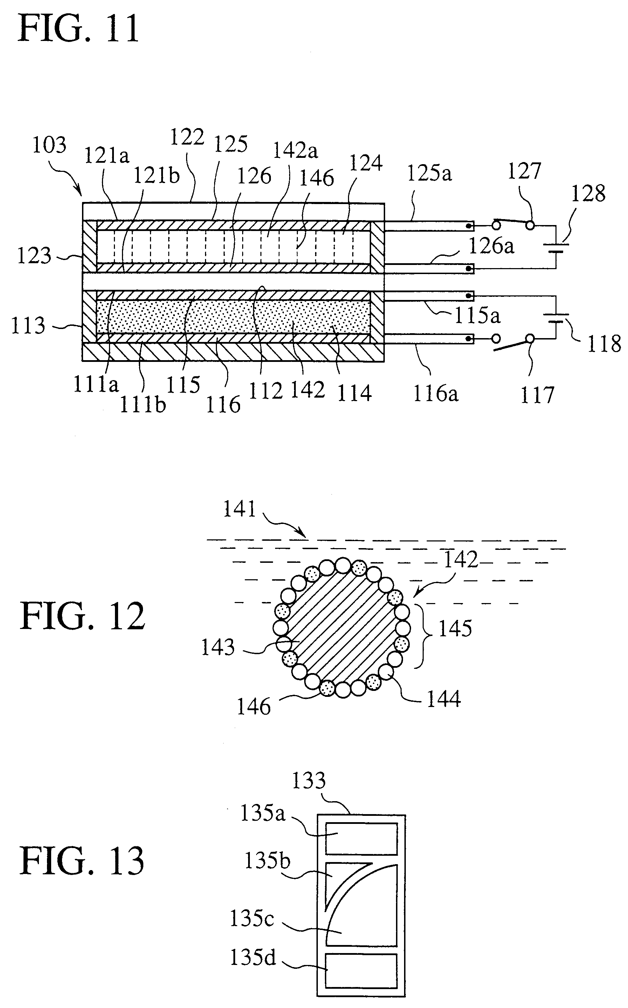

Referring now to Fig. 11, a description will be made hereinbelow in terms of a structure of the color display sections 103 constituting portions of an information display surface of the display device. In Fig. 11, the color display section 103 comprises cells 113, 123 placed in piles. The cell 113 has a one-side transparent display section 112 comprising two surfaces spaced from each other and disposed in opposed relation to each other, one surface acting as a transparent section 111a and the other surface serving as a opaque section 111b. The cell 113 is filled with an EA fluid 114 corresponding to the EA fluid (4, 24) in the foregoing embodiments. A transparent reference electrode layer 115 is formed on one (111a in the illustration) of the two surfaces of the display section 112, while a transparent facing electrode layer 116 is formed on the other surface (111b in the illustration) to be in opposed relation to the reference electrode layer 115. The reference electrode layer 115 and the facing electrode layer 116 are respectively connected through electric wires 115a, 116a to an electric field application means made up of a switch 117 and a power supply 118. In this embodiment, the EA fluid 114 is yellow in color at the time of no application of the electric field, while the opaque section 111b is colored in red.

On the other hand, the cell 123, in place of the previously described one-side transparent display section 112, has double-side transparent display section 122 comprising two surfaces 121a, 121b transparent and spaced from each other to be in opposed relation to each other. The other structure is the same as that of the above mentioned cell 113 except that an EA fluid 124 (similarly corresponding to the EA fluid in the foregoing embodiments) is green in color. A reference electrode layer 135 and facing electrode layer 126 of the cell 123 are respectively connected through electric wires 125a, 126a to electric field application means comprising a switch 127 and a power supply 128. The power supplies 128, 118 of the cells 123, 113 can be replaced with a single power supply to be used in common for both cells 123, 113. As obvious from the illustration, the color display section 103 is constructed such that the display section 122 of the cell 123 is placed in piles on the transparent section 111a of the other cell 113.

The EA fluid 114 within the cell 13, as shown in Fig. 12, is produced by uniformly dispersing yellow EA particles 142 in a colorless and transparent electrical insulating medium 141. Each of the EA particles 142 is composed of a core body 143 made of a polymer compound and a surface layer 145 made with a mixture of inorganic EA matters 144 and yellow pigments 146, thus forming inorganic and organic composite particles (142). As well as the foregoing embodiment, in this embodiment, the electrical insulating medium 141 is made of a colorless and transparent silicone oil, the organic high-molecular compound for producing the core body 143 of each of the inorganic and organic composite particles is polyacrylate, and the inorganic EA matter 144 for producing the surface-layer 145 is white titanium hydroxide (see the preparation examples below). The EA fluid 4 appears to be yellow due to the color of the surface layers 145 of the inorganic and organic composite particles (142). On the other hand, the EA fluid 124 within the cell 123 is the same as the EA fluid 114 except that green pigments are used in place of the yellow pigments for the surface layers 145 of the inorganic and organic composite particles 142 (see the preparation examples below), with the result that the color of the EA fluid 124 is green at the time of the non application of an electric field.

In the color display section 103, when the switch 127 is in the off condition, regardless of the on/off condition of the other switch 117, the display surface 122 appears to be evenly green which is the color of the EA fluid 124 within the cell 123 when an electric field is not applied thereto. When the switch 127 turns into the on condition, the EA particles 142 of the EA fluid 124 interposed between the reference electrode layer 125 and the facing electrode layer 126 are coordinate-linked with each other along the electric field direction to form chain bodies (46) as shown in Fig. 3. With this chain body formation, light can pass through the gaps between the chain bodies, with the result that the EA fluid 124 becomes transparent in a direction normal to the transparent section 121a.

At this time, if the other switch 117 is in the condition, the color of the transparent section 111a of the cell 113 is yellow which is the color in no application of the electric field to the EA fluid 142, whereupon the surface color of the color display section 103 turns from the green into yellow. If the switch 117 takes the on state while the switch 127 is still in the on state, the EA fluid 114 within the cell 113 is oriented to become transparent. Accordingly, the surface color of the color display section 103 turns from yellow into red, i.e.,, the color of the opaque section 111b. As described above, with the appropriate on/off control of the electric field within each cell of the color display section 103, the surface color of the color display section 3 varies selectively among three colors of green, yellow and red.

Although the description has been made in terms of the color display section 103, other color display sections 104a to 10d also have the same structure as the color display sections 103 except that the surface configuration of the cell is different therefrom. These color display sections 104a to 104d are appropriately selected and arranged longitudinally in correspondence with the road configurations such as straight-advancing portions, crossroads 105, junctions 106 and curvatures, thus turning out the information display surface 101.

Although in this embodiment each cell has a single reference electrode layer, it is also possible that a color display block is made such that as shown in Fig. 13 a cell 133 is equipped with a plurality of reference electrode layers 135a, 135b, 135c and 135d, successively arranged, and means is provided so as to freely apply the electric fields to between the reference electrode layers and facing electrode layers (not shown). In this case, the whole of the road map 102 can also be constructed with one cell.

In the color display device according to the fifth embodiment, the information display surface 101 (the switches of the color display sections 103, 104a to 104d) is controllable through a microcomputer or the like on the basis of the traffic jam information of the actual roadway detected with ultrasonic sensors or the like. With this arrangement, for example, the color of the corresponding portion on the road map 102 is controllable to be red when the traveling speed of motor vehicles is below 20 km/hr, i.e., when the traffic situation is jam, controllable to be yellow when the traveling speed is 20 to 40 km/hr, i.e., when the traffic situation is confusion, and further controllable to be green when being over 40 km/hr, i.e., when being normality.

Sixth Embodiment

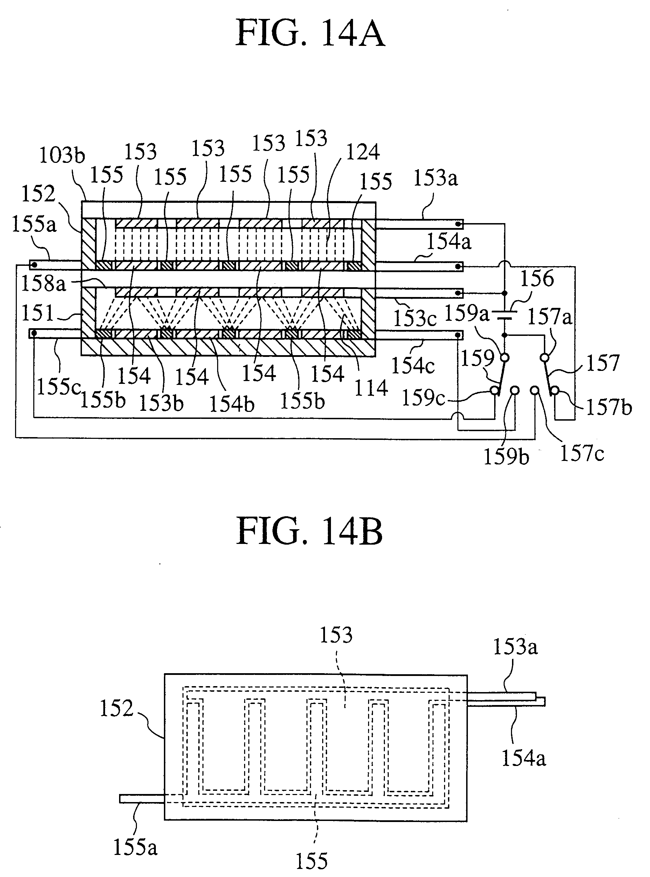

Figs. 14A and 14B are illustration of a color display section of a color display device according to a sixth embodiment of the present invention. In Fig. 14, the color display section 103b is composed of a one-surface transparent cell 151 and a double-surface transparent cell 152 like the foregoing the fifth embodiment of the present invention. In the double-surface transparent cell 152, a comb-shaped reference electrode layer 153 is formed on one transparent surface, while a transparent facing electrode layers 154 is formed on the other transparent surface to be in opposed relation to the reference electrode layer 153. In addition, a non-facing electrode layer 155 is provided on the other surface carrying the facing electrode layer 154 and at non-opposed sections to the reference electrode layer 153, i.e., at sections opposed to the portions between the tooth of the reference electrode layer 153. An electric wire 153a is drawn out from the reference electrode layer 153 and coupled through a power supply 156 to an input terminal 157a of a change-over switch 157. Furthermore, a electric wire 154a is drawn out from the facing electrode layer 154 and connected to one output terminal 157b of the change-over switch 157. Moreover, an electric wire 155a is drawn out from the non-facing electrode layer 155 and connected to the other output terminal 157c of the change-over switch 157. The cell 152 is filled with a green-colored EA fluid 124 corresponding to that of the cell 123 in the foregoing fifth embodiment.

On the other hand, the other cell 151 has the same structure as the cell 152 except that its surface brought into contact with the cell 152 makes up a transparent section 158a and its other surface constitutes an opaque section 158b. This opaque section 158b is colored in red. Furthermore, an electric wire 153c is drawn out a reference electrode layer 153b and connected through a power supply 156 to an input terminal 159a of a change-over switch 159, and an electric wire 154c is drawn out from a facing electrode layer 154b to be coupled with one output terminal 159b of the same change-over switch 159, whereas an electric wire 155c is drawn out from a non-facing electrode layer 155b to be connected with the other output terminal 159c of the same change-over switch 159. This cell 151 is filled with a yellow-colored EA fluid 114 which is equal to that in the foregoing fifth embodiment.

The operation of the color display section 103b is as follows. That is, first, in a state in which the input terminal 157a of the change-over switch 157 is in connecting relation to the one output terminal 157b of the change-over switch 157, an electric field takes place between the reference electrode layer 153 and the facing electrode layer 154 so that the EA fluid 124 therebetween turns into chain bodies arranged along directions perpendicular to the display surface, thus coming into a transparent state. Secondly, when the change-over switch 157 is operated so that its input terminal 157a and output terminal 157c are brought into contact with each other, the electric field disappears between the reference electrode layer 153 and the facing electrode layer 154, besides an electric field is established between the reference electrode layer 153 and the non-facing electrode layer 155, with the result that the EA particles of the EA fluid 124 are released from the chain configurations, while rapidly turning into chain bodies inclined between the reference electrode layer 153 and the non-facing electrode layer 155, which makes the light difficult to vertically pass into the cell 152. For this reason, the cell 152 becomes opaque. In this state, the surface color of the color display section 103b is green.

Subsequently, if the input terminal 159a and output terminal 159c of the change-over switch 159 are made in the connecting condition while the input terminal 157a and output terminal 157b of the change-over switch 157 are in connecting relation to each other to make the cell 152 transparent, an electric field is established between the reference electrode layer 153b and the non-facing electrode layer 155b so as to configure the chain bodies inclined relative to the display surface. For this reason, difficulty is encountered to permit the light to vertically pass into the cell 151, with the result that the surface color of the color display section 103b becomes yellow. Furthermore, the input terminal 159a comes into the connecting state with the output terminal 159b, an electric field takes place between the reference electrode layer 153b and the facing electrode layer 154b, whereby the EA fluid 114 within the cell 151 also turns into chain bodies extending in directions normal to the display surface so as to be transparent. Accordingly, the surface color of the color display section 103b becomes red, i.e., the color of the opaque section 158b.

In this color display section 103b, in accordance with the change-over operation of the switch 157, the cell 152 quickly and selectively takes one of the transparent and opaque states. Accordingly, if being constructed using the color display section 103b in this second embodiment like the first embodiment, the display device has an advantage that an information display can be accomplished instantaneously in response to traffic jam information varying every moment.

A detailed description will be made hereinbelow in terms of the EA fluids adopted in the above-described first to sixth embodiment of the present invention.

If providing the electric alignment effect, any solid particles such as elements, organic compounds, inorganic compounds and mixtures of these materials can be used as the EA particles in the present invention, for example, particles such as inorganic ion exchangers, metal oxides, silica gels and electrical semiconductive inorganic matters, carbon black, and particles whose surface layers are made of these materials. However, as shown in Fig. 2, these EA particles are particularly preferable to be the inorganic and organic composite particles 42 each comprising a core body 43 made of a polymer compound and a surface-layer 45 including inorganic EA matters (and pigments). Since the inorganic and organic composite particle 42 has a high degree of freedom in coloring and in addition the surface layer 45 including the inorganic EA matters 44 with a relatively large specific gravity is carried by the organic high-molecular compound 43 with a relatively small specific gravity, the specific gravity of the entire particle 42 is adjustable to become close to that of the electrical insulating medium 41. Accordingly, the EA fluid obtained by dispersing the particles 42 in the electrical insulating medium 41 is excellent in color visibility and storing stability.

The coloring of the inorganic and organic composite particles can be done in terms of the surface layers 45 and/or core bodies 43. Particularly, it is advantageous to color the surface layers 45. For coloring the surface layers 45, it is preferable that the surface layers 45 are formed with the mixtures of the inorganic EA matters 44 and pigments. In the case that the color of the inorganic EA matter 44 itself is used as the color of the EA particle, the addition of the pigment is unnecessary. For coloring the core bodies 43, anyone of the dye, generally known as a dye for synthetic resins, and pigment is usable. This coloring matter can previously be mixed into a monomer for formation of the core body 43 before the monomer is polymerized, or mixed into a synthetic resin or colors it so as to be included in the core body.

Among the organic high-molecular compounds usable as the core bodies 43 of the inorganic and organic composite particles 42 are poly(meth)acrylate, (meth)acrylate-styrene copolymer, polystyrene, polyethylene, polypropylene, nitrile rubber, butyl rubber, ABS resin, nylon, polyvinyl butyrate, ionomer, ethylene-vinyl acetate copolymer, vinyl acetate resin, polycarbonate resin and others, mixtures including one or more of these materials, or copolymers of these monomers or oligomers or copolymers with other monomers or oligomers.

Various materials can be employed as the inorganic EA matters 44 for formation of the surface layers 45. For instance, there are inorganic ion exchanger, silica gel, and electrical semiconductive inorganic matter. The detail of the inorganic EA matters 44, a method of forming the EA particles 42 using the inorganic EA matters 44 and coloring method are described in the Japanese Patent Application No. 6-192633 by the same inventors as the present invention. The limitation is not particularly imposed on the diameter of the inorganic and organic composite particles 42, while the diameter thereof is preferable to be 1.0 $\mu$m to 500 $\mu$m, more preferably 5 $\mu$m to 200 $\mu$m. As well as the particles 42, the diameter of the fine-particle-like inorganic EA matters is not particularly limited, while being preferable to 0.005 $\mu$m to 100 $\mu$m, more preferably 0.01 $\mu$m to 10 $\mu$m.

In the inorganic and organic composite particles 42, the ratio in weight between the inorganic EA matter 44 for formation of the surface layer 45 and the organic high-molecular compound for formation of the core body 43 is not particularly limited, while for offering the EA fluid with a retention stability the ratio of the inorganic EA matters relative to the total weight of the EA matters and the organic high-molecular compound is preferable to be 1% to 60% by weight, particularly preferable to be 4% to 30% by weight. If the ratio of the inorganic EA matters is below 1% by weight, the electric alignment characteristic of the EA particles obtained results in being unsatisfactory, and on the other hand, if exceeding 60% by weight, the specific gravity becomes excessive so that EA particles may suffer from deterioration of the retention stability.

As examples of the electrical insulating media employed in the EA fluid, there are diphenyl chlorides, butyl sebacates, aromatic polycarbonate higher alcohol esters, halophenyl alkyl ethers, transformer oils, paraffin chlorides, fluorine-based oils, silicone-based oils, fluorosilicone-based oils and others, although any fluid and mixture are usable as long as being chemically stable and allowing the stable dispersion of the EA particles.

This electrical insulating medium 41 sometimes has a color in itself, while the coloring is also possible if required. When coloring it, it is desirable to use an oil soluble dye or dispersion dye which is of the type that is soluble in the selected electrical insulating medium and maintains the electrical characteristics. There is no problem even if a dispersing agent, surface active agent, viscosity controlling agent, antioxidant, stabilizer and so on are included in the electrical insulating medium 41.

Preferably, the kinematic viscosity of this electrical insulating medium 41 is designed to be 1 cSt to 3000 cSt. If the kinematic viscosity is below 1 cSt, the retention stability of the EA fluid lowers because of much volatile component, on the other hand, if the kinematic is more than 3000 cSt, bubbles are generated therein and difficult to remove, thus providing troubles. That is, a discharge and spark take place at micro-areas of the bubbles at the time of the application of the electric field so that its insulating property deteriorates. For these reasons, the kinematic viscosity is preferable to be 10 cSt to 1000 cSt, particularly 10 cSt to 100 cSt.

The limitation is not particularly imposed on the concentration of the EA particles 42 in the electrical insulating medium 41, while it is preferable to be 0.5% to 15% by weight. If the particle concentration is less than 0.5% by weight, a number of the particle becomes small so that the EA fluid tends to be transparent even at the time of no application of an electric field thereto and hence the color contrast between the electric field applied state and the electric field non-applied state becomes unsatisfactory. When exceeding 15% by weight, the particle density becomes high, with the result that the transparency sensation is not sufficiently obtainable irrespective of the orientation control of the EA particles by the electric field application. From this point of view, the concentration of the EA particles 42 in the electrical insulating medium 41 is more preferable to be 2.5% to 10% by weight.

The electric field to be applied to the EA fluid is preferable to be, for example, over 0.1 kV/mm, particularly 0.25 kV/mm to 1.5 kV/mm. In response to the on/off control of the electric field, the EA fluid can transmit and shield light in the electric field direction. In addition, if the electric field strength is controlled to continuously vary in this state, the transmitted light intensity (reflected light intensity) is controllable in accordance with the electric field strength.

Moreover, a description will further be made hereinbelow in terms of seventh to ninth embodiments of the present invention, these embodiments being applicable particularly, but not exclusively, to a large-sized color display device.

<u>Seventh Embodiment</u>

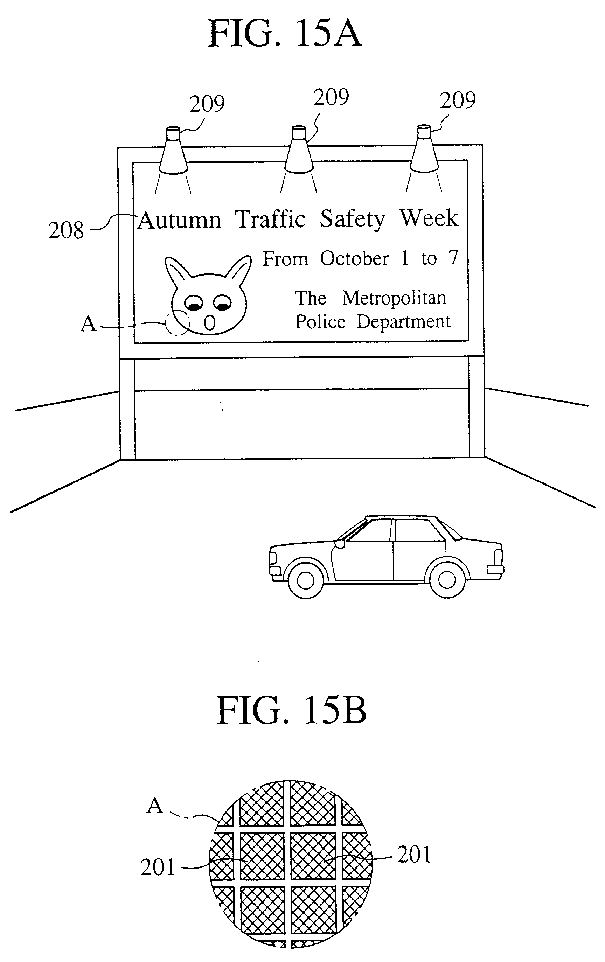

Figs. 15A and 15B are schematic illustrations of a large-sized color display device according to a seventh embodiment of the present invention. In Fig. 15A, this large-sized display device has a display surface 208 having a dimension of 10m in width and 5m in height. On the display surface 208 the image varies with the passage of time so as to continuously express various information and dynamic pictures. In addition, this display surface 208 is illuminated with illuminators 209. Fig. 15B is an enlarge view showing a portion of the display surface 208, indicated with character A circled in Fig. 15A. As shown in Fig. 15B a number of square picture elements (pixels) 201 are closely arranged vertically and horizontally to form a matrix-like configuration.

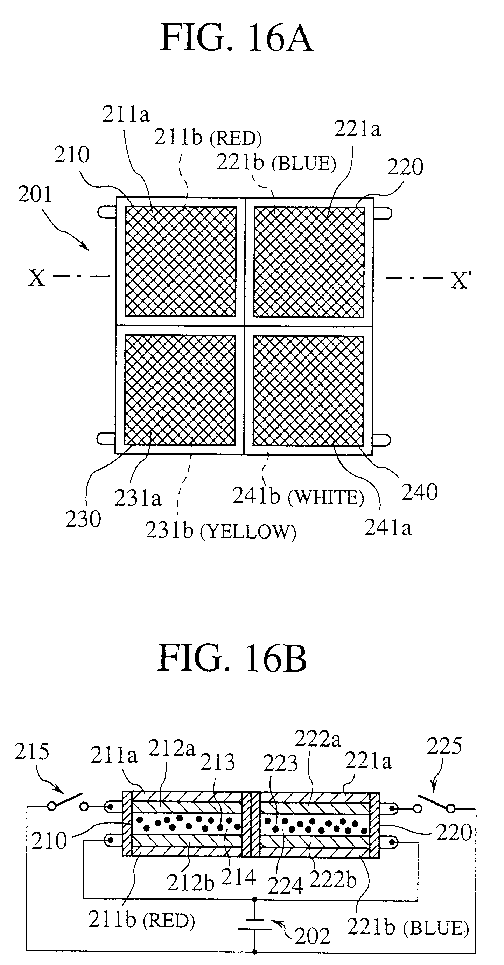

Figs. 16A and 16B are illustrations of one picture element of the large-sized display device according to this embodiment, Fig. 16A being a plan view showing the one picture element and Fig. 16B being a cross-sectional view taken along a line X-X' of Fig. 16A. The picture element 201 comprises four square cells 210, 220, 230 and 240 arranged vertically and horizontally to be adjacent to each other. These cells 210, 220, 230 and 240 substantially have the same configuration, and hence the description of the basic structure thereof will be made only about the cell 210. The cell 210 has two surfaces 211a and 211b disposed in opposed relation to each other. This cell 210 is of the one-surface transparent type that, of the two surfaces, one surface 211a is made to be a transparent plate and the other surface 211b is designed to be a colored opaque plate. A transparent reference electrode (layer) 212a is formed on the inner side of one, for example, the surface 211a, of the two surfaces 211a, 211b, while a transparent facing electrode (layer) 212b is attached onto the inner side of the other surface 211b. All the cells 210, 220 , 230 and 240 are of the one-surface transparent type, and the colored opaque plates 211b, 221b, 231b and 241b have different colors other than block, for example, red, blue, yellow and white. The cells 210, 220, 230 and 240 are arranged in parallel to each other and adjacent to each other on the same plane so as to form a display surface of the picture element 201.

An EA fluid 214 included in the cells 210, 220, 230 and 240 is produced such as described above with reference to Figs. 2 and 5. However, in this embodiment the pigment 46 is black in color. Accordingly, the EA fluid takes black in color when an electric field is not applied thereto.

In the cell 210, electric wires are drawn out from both the reference electrode 212a and facing electrode 212b and connected to a switch 215 and power supply 202, respectively, whereby an electric field is on/off-controllable between the reference electrode 212a and facing electrode 212b. The structures of the other cells 220, 230 and 240 have the same structure. For example, in the cell 220, electric wires are drawn out from both the reference electrode 222a and facing electrode 222b and connected to a switch 225 and the same power supply 202, respectively.

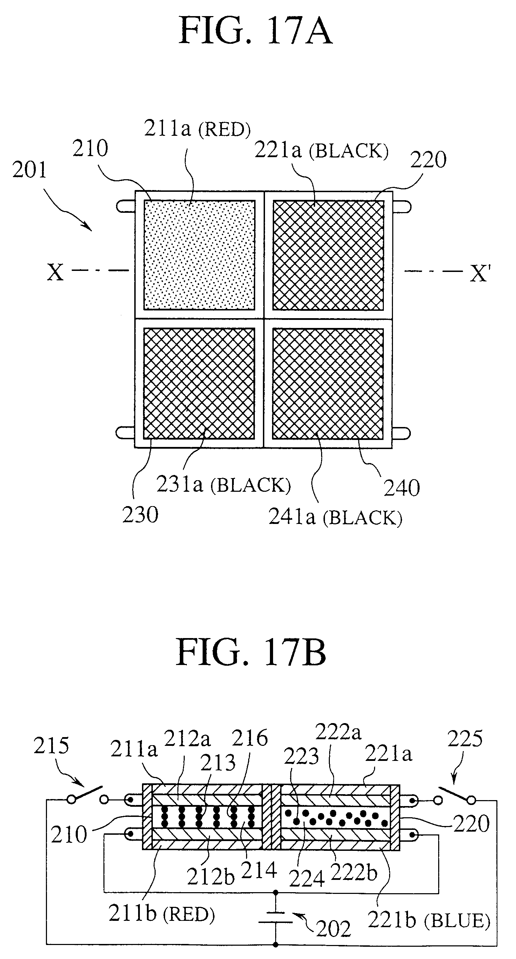

In operation, when all the switches coupled to the respective cells 210, 220, 230 and 240 are set to be in the off conditions, all the cells 210, 220, 230 and 240 appear to be black in color as shown in Fig. 16A because of the black EA particles within the EA fluid, that is, the picture element 201 is black in color. Let it be assumed that after this only the switch 215 for the cell 210 is turned on. At this time, as shown in Figs. 17A and 17B the EA particles 213 are aligned or arranged in directions perpendicular to the electrodes 212a, 212b due to the EA effect caused by the established electric field as described above with reference to Figs. 2 and 3 to make chain bodies 216. For this reason, light can pass into the EA fluid 214 whereby the color, i.e., red, of the colored opaque plate 211b appears.

Thereafter, when the switch 215 for the cell 210 is set to the off state and the switch 225 for the cell 220 is set to the on state, the EA particles within the cell 210 returns to the original state, while the EA particles 223 within the cell 220 take the chain configurations so that light can pass into the EA fluid 224 within the cell 220, with the result that the color, i.e., blue, of the colored opaque plate 221b appears. Accordingly, the picture element 201 becomes blue in color. Similarly, through the operation of switches for the cells 230 and 240, the picture element 201 turns yellow or white.

The large-sized display device is constructed with a number of picture elements arranged vertically and horizontally. Accordingly, even if 1/4 of the display surface of each of the picture elements 201 is changed into a color other than black, when the size of the picture element is sufficiently smaller as compared with the distance from the viewers, this picture element wholly appears to turn into that color,

Moreover, if given two or three cells of the picture element 201 are simultaneously turned on, the color of this picture element 201 becomes a mixed color of those colors. For example, when the cell (red) 210 and the cell (blue) 220 simultaneously come into the on states, the picture element 201 becomes purple in color when being viewed from a distant place. Further, when the cell (red) 210 and the cell (white) 240 simultaneously come into the on states, the picture element 201 turns orange. Accordingly, a large-sized reflection type display device, which can widely change the color and image, is practicable with the switches of the picture elements 201 being controllable through a computer or the like. In the present invention, limitation is not imposed on the configurations, number, arrangement pattern, colors, circuit arrangements and others of the cells. For example, it is also appropriate that each of the cells has a circular configuration. Moreover, circular cell configurations whose circumferences come into contact with each other are also possible, and the cells also can have parallel-arranged rectangular configurations whose longer sides come into contact with each other. Furthermore, although the colors of the colored opaque plates of the cells are preferable to be red, blue, yellow and white, respectively, it is also possible to employ a different color combination.

Eighth Embodiment

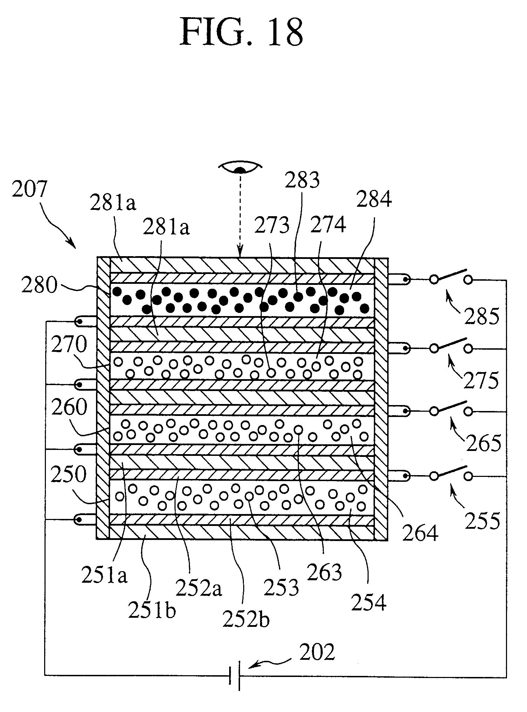

Fig. 18 is a cross-sectional view showing one picture element of a large-sized display device according to an eighth embodiment of the present invention, including a circuit arrangement therefor. This picture element 207 comprises four cells 250, 260, 270 and 280 placed in piles to make up a laminated structure. Of these four cells 250, 260, 270 and 280, the cell 250 is of the one-surface transparent type that one surface is composed of a transparent plate 251a and the other surface is composed of a colored opaque plate 151b, both the surfaces being disposed in opposed relation to each other. Whereas, the other cells 260, 270 and 280 are of the double-surface transparent type that both surfaces opposed to each other are transparent. For example, in the cell 280, two opposed surfaces are made up of transparent plates 281a and 281b. This picture element 207 has a laminated structure in which the double-surface transparent cells 260, 270 and 280 are placed on the one-surface transparent cell 250. In addition, in this embodiment the adjacent transparent surfaces between the cells are constructed as a single transparent plate.

Moreover, a transparent reference electrode (layer) is formed on one of the two opposed surfaces of each of the cells 250, 260, 270 and 280. For example, in the case of the cell 250, a transparent reference electrode 252a is formed on the inner side of its surface 251a. Further, a transparent facing electrode 252b is formed on the inner side of the other surface 251b. On this point, the other cells are the same as the cell 250.

EA fluids 254, 264, 274 and 284 containing EA particles 253, 263, 273 and 283 dispersed in an electrical insulating medium are put in between the electrodes within the cells 250, 260, 270 and 280, respectively. Of these, the EA particles 283 of the EA fluid 284 packed within the cell 280 having a transparent plate 281a being a display surface of the picture element 207 are colored in black, while the EA particles 253, 263, 273 within the cells 250, 260, 270 and the colored opaque plate 251b are made to have different colors other than black. The reference electrodes and facing electrodes of the cells 250, 260, 2770 and 280 are connected to switches 255, 265, 275 and 285 and a power supply 202, respectively. As well as in the foregoing embodiments, in the EA fluids 254, 264, 274 and 284, the EA particles 253, 263, 273 and 283 are respectively dispersed in a silicone oil being the electrical insulating medium. In the EA particles 253, a pigment is not included because the titanium hydroxide itself being the inorganic EA material is white in color, while the colors of the pigments included in the surface layers of the EA particles 253, 273 and 283 are blue, red and black, respectively. The opaque plate 251b is colored in yellow.

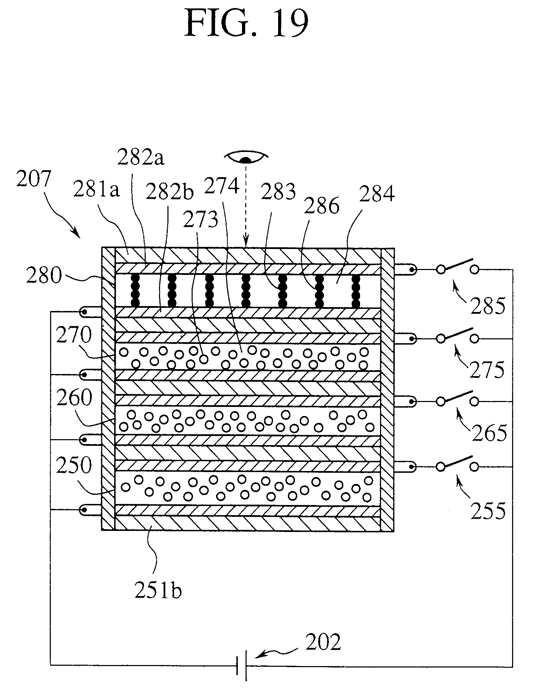

The picture element 207 operates as follows. In a state in which the switch 285 for the cell 280 serving as the display surface 281a of the picture element 207 is set to the off state, irrespective of the on/off states of the other switches, the display surface 281a appears to be black, i.e., the color of the EA particles 283. Then, for example, when as shown in Fig. 19 the switch 285 is turn on and the switch 275 remains in the off state, the EA particles 283 within the cell 280 are aligned vertically between the electrodes 82a and 82b due to the EA effect caused by the electric field to form chain configurations 286, with the result that light can pass into the EA fluid 284 so that the color, i.e., red, of the EA fluid 274 of the cell 270 appears. Accordingly, the display color of the picture element 207 turns red.

Similarly, if the switches 285 and 275 are turned into the on state and the switch 265 is set to the off state, the cells 280 and 270 become transparent, whereupon the color, i.e., blue, of the cell 260 appears. Further, if the switches 285, 275 and 265 are turned into the on state and the switch 255 is set to the off state, the color becomes white, and if all the switches are turned into the on state, all the cells become transparent, whereupon the color, i.e., yellow, of the colored opaque plate 251b being a bottom surface appears. Thus, the picture element 207 is capable of the color variation display among black, white, red, blue and yellow by means of the on/off operation of the switches 255, 265, 275 and 285.

In the large-sized display device according to this embodiment, a number of picture elements 207 whose size is sufficiently small relative to the viewing distance are arranged vertically and horizontally. Accordingly, if the adjacent picture element displays a different color, the colors of the sections around this picture element are mixed so that a mixed color is recognized. If the switches of these picture elements are controlled through a computer, it is possible to provide a reflection type large-sized display device which is capable of displaying various colors including intermediate colors and images. The cell configuration, number, color, laminated structure, circuit arrangement of the cells are not limited to the illustrations.

Ninth Embodiment

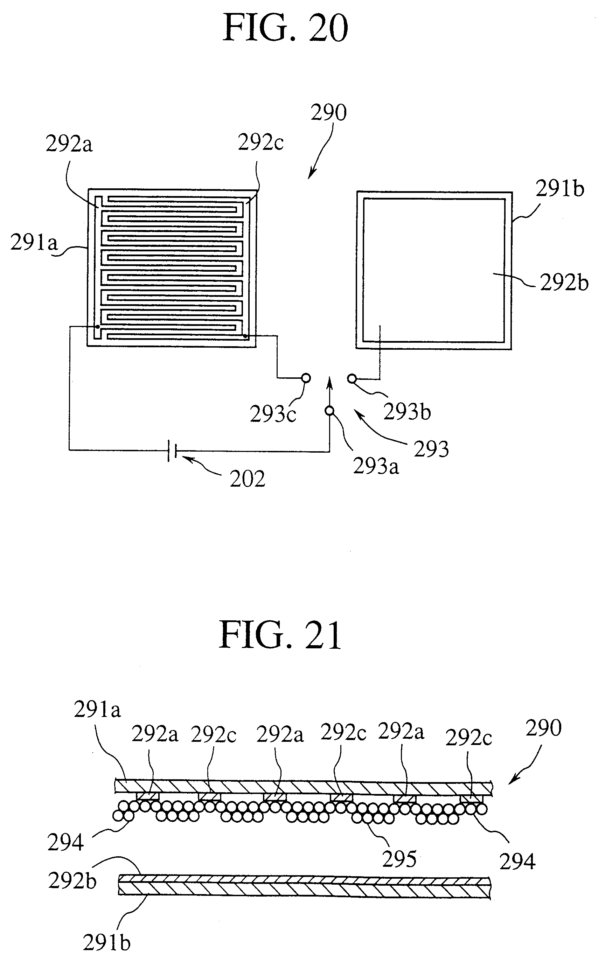

The picture elements in this ninth embodiment of the present invention is similar to those in the foregoing seventh embodiment except for the electrode structures of the cells and the electric circuit. For this reason, the description will be made only about one cell. Fig. 20 shows an electrode structure and an electric circuit for one cell 290. A comb-like transparent reference electrode (layer) 292a is formed on a transparent surface 291a of the two surfaces of the cell 290 and in addition a transparent adjacent electrode (layer) 292c is formed on the same transparent surface 291a so as to be placed between the teeth of the comb-like reference electrode 292a to be adjacent thereto. Moreover, a facing electrode (layer) 292b is entirely formed on the other surface 291b of the cell 290.

The electric circuit for this cell 290 has the following arrangement. That is, the adjacent electrode 292c formed on the transparent surface 291a and the facing electrode 292b formed on the other surface 291b are connected with fixed contacts (terminals) 293b and 293b of a change-over switch 293, respectively. A movable contact 293a of the change-over switch 293 is connected with, for example, the (-) side terminal of the power supply 202. Whereas, the reference electrode 292a on the transparent surface 291a is coupled with the (+) side terminal of the power supply 202. That is, this electric circuit is arranged such that through the change-over operation of the change-over switch 293 an electric field can selectively be applied to between the reference electrode 292a and the adjacent electrode 292c and between the reference electrode 292a and the facing electrode 292b.

The operation of the cell 290 due to the electric circuit is as follows. First, when the change-over switch 293 is connected to the facing electrode 292b side, an electric field takes place between the reference electrode 292a and the facing electrode 292b, with the result that an EA fluid present between these electrodes is electro-aligned to configure chain bodies extending in directions normal to the transparent surface 291a, whereby the cell 290 becomes transparent to permit the color of the colored opaque plate 291b to be visible. Subsequently, when the change-over switch 293 is switched to the adjacent electrode 292c side, an electric field occurs between the reference electrode 292a and the adjacent electrode 292c. At this time, in the EA fluid, as shown in Fig. 21, the EA particles 294 is electro-aligned between the reference electrode 292a and the adjacent electrode 292c to configure chain bodies 295 extending in directions parallel to the transparent surface 291a. Since the configured chain bodies 295 cover the transparent surface 291a, the cell 290 comes into a black and opaque state because of the color of the EA particles 294.

In the picture element according to this embodiment, variation between the transparent state and opaque state of the cell 290 can immediately be achieved depending upon the change-over operation of the change-over switch 293, thus providing a large-sized display device with an excellent electric field responsibility. The picture elements in this embodiment are arranged in parallel to each other to be adjacent to each other like the foregoing seventh embodiment, while the electrode structure and circuit arrangement are also applicable to the laminated structure in the aforesaid eighth embodiment. Furthermore, it is also possible the reference electrode 292a and the adjacent electrode 292c are arranged to have opposite polarities. Although in this embodiment the reference electrode 292a and the adjacent electrode 292c have comb-like patterns, it is also appropriate that they have any patterns such as spiral patterns, branch-like patterns if making a adjacent arrangement.

In the seventh to ninth embodiments, the EA fluids are basically similar to those in the first to sixth embodiments. As the organic high-molecular compounds for the core bodies of the EA particles, it is also possible to use materials including functional groups such as the hydroxyl group, the carboxyl group and the amino group. It is desirable to use such a functional group included organic high-molecular compound because it can improve the EA effect.

Similarly, as the inorganic EA matters for the formation of the surface layers there is an inorganic ion exchanger, silica gel, electrical semiconductive inorganic matter, one of these materials metal-doped, and material in which one of these materials is used as an electrical semiconductive layer and formed on a different carrier. For example, the preferable electrical semiconductive inorganic matters are as follows: (1) metal oxides such as $SnO_2$ and amorphous type titanium dioxide (produced by Idemitsu Petrochemical Kagaku Co., Ltd.); (2) metallic hydroxide such as titanium hydroxide and niobium hydroxide, the titanium hydroxide including hydrous titanium oxide (produced by Ishihara Sangyo Co., Ltd.), metatitanic acid (another name: $\beta$ titanic acid, $TiO(OH)_2$, and orthotitanic add (another name: $\alpha$ titanic acid, $Ti(OH)_4$); and (3) hydroxides of metal oxides such as $FeO(OH)$ (gacite), and inorganic ion exchangers.

As examples of the inorganic ion exchangers there are the following materials: (1) hydroxides of polyvalent metals; (2) hydrotalcites; (3) acid salts of polyvalent metals; (4) hydroxyapatite; (5) nashicon-type compounds; (6) clay minerals; (7) potassium titanates; (8) heteropolyacid salts; and (9) insoluble ferrocyaides, which will be described hereinafter in detail. The hydroxides of polyvalent metals are represented by a general formula $MOx(OH)y$ (M is a polyvalent metal, x is a number of equal to or larger than 0, and y is a positive number). For example, among the hydroxides of polyvalent metals are titanium hydroxides, zirconium hydroxides, bismuth hydroxides, tin hydroxides, lead hydroxides, aluminum hydroxides, tantalum hydroxides, niobium hydroxides, molybdenum hydroxides, magnesium hydroxides, manganese hydroxides, iron hydroxides and so on. For instance, the titanium hydroxides include hydrous titanium oxides (another name: metatitanic acid or $\beta$ titanic acid, $TiO(OH)_2$) and titanium hydroxides (another name: orthotitanic acid or $\alpha$ titanic acid, $Ti(OD)_4$). This also applies to other compounds.

Furthermore, the hydrotalcites are represented by a general formula $M_{13}Al_6(OH)_{43}(CO)_3$ $12H_2O$ (M is a bivalent metal). For example, a bivalent metal M is Mg, Ca, Ni or others. In the acid salts of polyvalent metals there are included titanium phosphates, zirconium phosphates, tin phosphates, cerium phosphates, chromium phosphates, zirconium arsenates, titanium arsenates, tin arsenates, cerium arsenates, titanium antimonates, tin antimonates, tantalum antimonates, niobium antimonates, zirconium tungstates, titanium vanadates, zirconium molybdates, titanium selenates, tin molybdates, and so on. Moreover, the hydroxyapatites include, for example, calcium apatites, lead apatites, strontium apatites, cadmium apatites, and so on. The nashicon-type compounds include, for example, $(H_3O)Zr_2(PO_4)_3$. In the present invention, it is also possible to use nashicon-type compounds in which $H_3O$ is substituted by Na.

Further, among the clay minerals are montmorillonites, sepiolites, bentonites, and other minerals. Of these, the sepiolite is particularly preferable. The potassium titanates are expressed by general formula $aK_2O$ $bTiO_2$ $nH_2O$ (a is a positive number satisfying $0 < a \le 1$, and b denotes a positive number satisfying $1 \le b \le 6$, and n is a positive number), for instance, including $K_2$ $TiO_2$ $2H_2O$, $K_2O$ $2TiO_2$ $2H_2O$, $0.5K_2O$ $TiO_2$ $2H_2O$, $K_2O$ $2.5TiO_2$ $2H_2O$, and so on. Of these compounds, the compounds in which a or b is not integer can easily be produced with the compounds in which a or b is an integer being acidificated and K being substituted by H.

Still further, the heteropolyacid salts are expressed by general formula $H_3AE_{12}O_{40}$ $nH_2O$ (A is a phosphorus, arsenic, germanium, or silicone, and E denotes a molyodenum, tungsten, or vanadium, and n indicates a positive number), for example, including ammonium molybdophosphates, and ammonium tungstophosphates. The insoluble ferrocyanides are expressed by a general formula $Mb-pxaA[E(CN)_6]$ where M is an alkali metal or hydrogen ion, A is a heavy metal ion such as lead, copper, nickel, cobalt, manganese, cadmium, iron (III) and titanium, E denotes iron (II), iron (III) cobalt or the like, b is 4 or 3, a indicates the valency of A, and p stands for a positive number of 0 to b/a, for example including insoluble ferrocyan compounds such as $Cs_2Zn[Fe(CN)_6]$ and $K_2Co[Fe(CN)_6]$.

The above-mentioned inorganic ion exchangers have an OH group, and include substitution type ion exchanges in which a portion or all the ions present in the ion exchange site of these inorganic ion exchangers are substituted by another ions. That is, if the aforesaid inorganic ion exchangers are expressed by R-$M^1$ ($M^1$ is the ionic species in the ion exchange site), the present invention includes a substitution type inorganic ion exchanger in which a portion or all of $M^1$ of R-$M^1$ is substituted by an ionic species $M^2$ different from the M1. That is,

$$xR - M^1 + yM^2 \rightarrow Rx - (M^2)y + xM^1$$

where x and y each represents the valencies of ionic exchange species $M^2$ and $M^1$, respectively.

Depending upon the kind of the inorganic ion exchanger having an OH group, $M^1$ is generally H+ in a case where the inorganic ion exchanger shows the cation exchangeability. In this case, $M^2$ can be arbitrarily selected from metallic ions such as an alkali metal, alkaline earth metal, polyvalent typical metal, transition metal, and rare earth metal, other than $H^+$. In the case that the inorganic ion exchanger having the OH group indicates anion exchangeability, $M^1$ is generally $OH^-$, and in this case, $M^2$ is any one of anions other than $OH^-$ which include, for example, I, Cl, SCN, $NO_2$, Br, F, $CH_3COO$, $SO_4$, $CrO_4$, composite ions, and so on.

Moreover, in the inorganic ion exchangers in which, being once lost due to the high-temperature heating process, the OH group is again added through the water-submerged process or the like, the inorganic ion exchanger after the high-temperature heating processing is also one of the inorganic ion exchangers usable in the present invention, for example, nashicon-type compounds such as the materials obtained by heating, at a high temperature (500 to 700°C), hydrotalcite and $HZr_2(PO_4)_3$ obtainable by heating $(H_3O)Zr_2(PO_4)_3$. One or a plurality of ones of these inorganic ion exchanges can be used as the surface layer. As the inorganic ion exchangers, hydroxides of polyvalent metals or acid salts of polyvalent metals are particularly preferable.

The metal-doped inorganic EA matter is exemplified by antimony-doped tin oxide or the like. The metal doping is effective in the case of improving the electrical conductivity of the inorganic EA matter. Furthermore, in the examples in which an inorganic EA matter is placed as the electrical semiconductive layer on an carrier, as the carriers there are inorganic particles such as titanium oxide, silica, alumina and silica-alumina and organic high-molecular particles such as polyethylene and polypropylene, and as the electrical semiconductive matters there are antimony-doped tin oxide, and so on. It is also possible to mix two kinds of these inorganic EA matters. The particularly suitable inorganic EA matters to be used as the surface layers of the inorganic and organic composite particles are metal oxides, metallic hydroxides, hydroxides of metal oxides, hydroxide of polyvalent metals, metal-doped inorganic EA matters, inorganic EA matters placed as the electrical semiconductive layer on another carrier.

For use of the inorganic EA matters, their electric conductivities are preferable to be in the range of $10^3$ $\Omega^{-1}$/cm to $10^{-11}$ $\Omega^{-1}$/cm. If the electrical conductivity exceeds $10^3$ $\Omega^{-1}$/cm, an excessive current passes into the EA fluid including this inorganic EA matter, thus enhancing the power consumption, as well as excessively heating the device. On the other hand, if being below $10^{-11}$ $\Omega^{-1}$/cm, the EA effect becomes unsatisfactory so that the inorganic EA matter does not demonstrate a sufficient effect. In the inorganic and organic composite particles, the weight ratio of the inorganic EA matter for formation of the surface layers and the organic high-molecular compound for formation of the core bodies is not particularly limited, while, for example, the weight ratio of (inorganic EA matters):(organic high-molecular compound) is preferable to be in the range of (1 to 60):(99 to 40), particularly preferable to be in the range of (4 to 30):(96 to 70). If the weight ratio of the inorganic EA matter is below 1%, the resultant EA fluid does not sufficiently show the EA effect. On the other hand, if exceeding 60%, the specific gravity becomes large, difficulty is experienced to perform the stable dispersion of the EA particles, besides an excessive current gets to flow into the resultant EA fluid.

The coloring of the EA particles is basically carried out in the same manner as in the foregoing first to sixth embodiments. The inorganic and organic composite particles can include other materials such as antioxidants, fillers, coupling agents and carbon blacks for the core bodies, and further include charge adjusting agents such as carbon blacks and amine-based compounds.

The specific gravity of the EA particles is preferable to be close to the specific gravity of the electrical insulating medium in stably dispersing them in the electrical insulating medium. Generally, taking the electrical insulating medium into consideration, the specific gravity is preferable to be 1.0 to 2.0. A large difference in specific gravity between the EA particles and the electrical insulating medium can cause the EA particles to naturally sink in the medium, making the uniform dispersion difficult. For these reasons, since as described in the foregoing embodiments a polymer compound with a relatively small specific gravity is used for the formation of the core bodies, even if the specific gravity of the inorganic EA matters for the surface layers is large, the resultant specific gravity of the EA particles can decrease. For the inorganic and organic composite particles, the kinds and ratio of the organic high-molecular compounds and the inorganic EA matters are selected so as to freely adjust their specific gravity.

As described above in the foregoing embodiments, although not limited, the diameter of the EA particles is preferably 0.1 μm to 500 μm, particularly 5 μm to 200 μm, and the shape thereof is a spherical configuration. If the particle diameter is below 0.1 μm, the light reflection deteriorates so that the EA fluid becomes substantially transparent, the viscosity of the EA fluid increases so that the responsibility to the on/off variation of the electric field lowers, and bubbles are easy to mix therein. On the other hand, if exceeding 500 μm, the responsibility to the on/off variation of the electric field is slow because of the excessive particle diameters, and the dispersion stability lowers. At this time, although not limited, the diameter of the inorganic EA matters is preferably 0.005 μm to 100 μm, more preferably 0.01 μm to 10 μm.

The inorganic and organic composite particles can be produced in various ways. As one example, there is a way in which the core body particles made of an inorganic and organic composite compound and the fine particles made of an inorganic EA matter are carried by means of a jet stream to come into collision with each other. In this case, the inorganic EA fine particles run into the surfaces of the core body particles at a high speed, thus being fixed thereto to form the surface layers thereon. Another way is that the core body particles are treated to float in a gas and a solution containing the inorganic EA matter is sprayed toward the floating core body particles. In this case, after being adhered thereonto, the solution is dried to form the surface layers.

For production of the inorganic and organic composite particles, the core bodies and the surface layers are preferable to be formed simultaneously. In this method, while the monomer or oligomer (referred merely to as monomers) of the core body forming organic high-molecular compound is emulsion-polymerized, suspension-polymerized or dispersion-polymerized in a polymerization medium, the inorganic EA fine particles and pigment are add to the monomer or the polymerization medium. The polymerization medium is preferable to be water, while a mixture of water and a water soluble organic solvent, and organic lean-solvent are also usable. According to this method, the monomer is polymerized in the polymerization medium to form core body particles, and at the same time the inorganic EA fine particles and the pigment are aligned on the surfaces of the core body particles so as to form surface layers on the surfaces thereof, thus coating the core body particles.

In producing the inorganic and organic composite particles by means of the emulsion polymerization or suspension polymerization, a combination of the hydrophobic property of the monomer and the hydrophilic property of the inorganic EA matter allows most of the inorganic EA matters to be aligned on the core body particles. According to the simultaneous formation method for the core bodies and surface layers, the inorganic EA particles and the pigment can strongly and finely be adhered onto the surfaces of the core body particles being made of a polymer compound, resulting in being firm inorganic and organic composite particles.

In the present invention, the inorganic and organic composite particles being used is not necessarily limited to spherical configurations, while, by means of the core body particle adjusting emulsion polymerization or suspension polymerization, the resultant inorganic and organic composite particles have substantially true spherical configurations. If having the true spherical configurations, light can be scattered omnidirectionally, which is advantageous in adjusting the transmission light intensity, besides the flow viscosity decreases and the responsibility to the electric field variation improves.

In the inorganic and organic composite particles produced in the above-mentioned various ways, particularly, produced in the core body and surface layer simultaneous formation method, a portion or whole of the surfaces thereof is covered with an organic high-molecular matter or thin films of additives such as dispersants and emulsifiers used in producing processes, whereby there is the possibility that the EA effect is unsatisfactorily shown. These thin films made of inert materials are removable by polishing the surfaces of the surface layers of the inorganic and organic composite particles. For this reason, in the present invention, it is desirable that the inorganic and organic composite particles are surface-polished and used for the EA fluid. The surface polishing of the inorganic and organic composite particles can be achieved in various ways. For instance, the inorganic and organic composite particles are dispersed in a dispersion medium such as water before stirred. In this case, it is also possible that abrasives such as sand particles and small balls are mixed into the dispersion medium and stirred together with inorganic and organic composite particles, or that the stirring is carried out using grinding stones. Moreover, it is also appropriate that the inorganic and organic composite particles are dry-stirred using the abrasives and grinding stones without being put in such a dispersion medium.

A more preferable polishing method is to stir the inorganic and organic composite particles by means of a jet stream or the like. The particles violently come into collision with each other due to the jet stream. As preferable points, this method does not require abrasives, and can easily separate the inert materials peeled from the particle surfaces in classification. In the case of the aforesaid jet stream stirring, although difficulty is experienced in some degree to determine the polishing conditions on the basis of the kind of the stirring apparatus, stirring speed, and the kind of the material of the inorganic and organic composite particles, it is generally desirable that, for example, the stirring speed is 6000 rpm and the stirring time is 5 to 15 minutes.

The EA fluid in the present invention is can be produced with the inorganic and organic composite particles and, it required, other components such as dispersants being stirred and uniformly mixed into the electrical insulating medium described above. Any kind of stirring machine is usable which is generally used in order to disperse solid particles in a liquid dispersion medium.

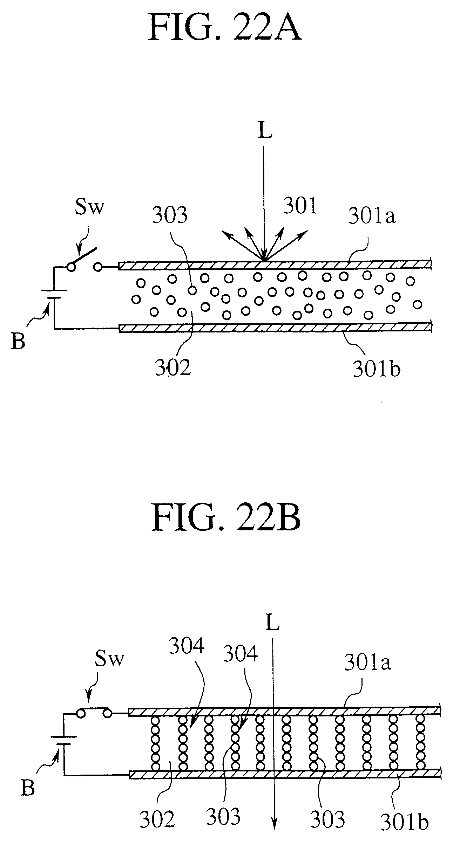

A more detailed description will be made hereinbelow in terms of the general operational principle of the EA fluid for a better understanding of the present invention. Figs. 22A and 22B are explanatory illustrations for the operational principle of the EA fluid. In Figs. 22A and 22B, transparent electrodes 301a and 301b are electrically coupled through a switch Sw to a power supply B. Between the transparent electrodes 301a and 301b there is packed an EA fluid produced by dispersing EA particles 303 in an electrical insulating medium 302. In Fig. 22A, the switch Sw is opened so that an electric field does not take place between the transparent electrodes 301a and 301b. In this state, the EA particles 303 randomly disperse and randomly disperse in the electrical insulating medium 302. Accordingly, when light L is incident on one electrode 301a side, the light L is irregularly reflected on the surfaces of the EA particles 303, whereby, when viewed from the light L incidence side, the EA fluid becomes opaque. At this time, the color of the EA fluid is equal to the color of the EA particles 303. Secondly, When as shown in Fig. 22B the switch Sw is closed so that an electric field is applied to between the transparent electrodes 301a and 301b, the EA particles 303, interposed between both the electrodes 301a and 301b, are aligned in directions normal to the electrodes 301a and 301b so as to form chain bodies 304. The concentration of the EA particles 303 dispersed in the electrical insulating medium 302 is below 15% by weight, more preferably below 10% by weight, and hence, due to the formation of the chain bodies 304, the EA particles are not present in the spaces between the chain bodies 304 so that the light L incident on the electrode 301a side can pass through the spaces into the EA fluid and the electrodes 301a, 301b. Accordingly, in this state, the color of the EA particles disappear and the EA fluid appears to be transparent.

When in this state the switch Sw is again opened so that the electric field between the electrodes 301a, 301b disappears, the chain bodies 304 are broken so that the EA particles 303 return to the original random and dispersed state, which makes the EA fluid opaque. The speed that the EA particles 303 return to the random state depends upon the viscosity of the electrical insulating medium 302, difference in specific gravity between the electrical insulating medium and the EA particles, temperature, presence or absence of vibrations, and other factors. Accordingly, if as described in the ninth embodiment both the reference electrode and adjacent electrode are formed on one surface of the cell and an electric field is applied to therebetween, the EA particles 303 turn into the chain bodies, not shown, parallel to the electrode surfaces, with the result that the EA fluid returns to the original opaque state. With this arrangement, the variation between the transparent and opaque states quickly occurs, thus providing an extremely high responsibility in a large-sized display device. The electric field strength between the transparent electrodes 301a, 301b depends upon the characteristic of the EA particles 303, and as described above, is set to be in the range of 0.1 kV/mm to 5.0 kV/mm, more preferably 0.25 kV/mm to 1.5 kV/mm. Furthermore, when the concentration of the EA particles in the EA fluid exceeds 1% by weight, as shown in Fig. 3 a plurality of chain bodies are joined with each other to form columns. Thus, when the concentration of the EA particles 303 is large, a number of columns are formed between the electrodes 301a, 301b, and in connection with this, as described above the spaces between the columns becomes wider as compared with the case of formation of a number of single chain bodies, with the result that the transmitted light intensity increases and the transparency improves. The description on the diameter of the EA particles and the coloring thereof has been made in the first embodiment, and a further description here will be omitted.

A description will be made hereinbelow in terms of the preparation examples for the EA fluids employed in the present invention.

Preparation Example 1 (white composition)

A mixture of 40 g of a titanium hydroxide (common name: hydrous titanium oxide produced by Ishihara Sangyo Co., Ltd., C-II), 300 g of a butyl acrylate, 100 g of a 1,3-butylene glycol dimethacrylate and a polymerization initiator was dispersed in 1800 ml of water containing a tertiary calcium phosphate as a dispersing stabilizer and suspension-polymerized while being stirred at a temperature of 60°C for one hour. The resultant product was filtered and acid-cleaned before water-cleaned and dried, thus obtaining inorganic and organic composite particles. Thereafter, using a jet stream agitator (hybridizer, manufactured by Nara Kikai Seisakusho Co., Ltd.), the inorganic and organic composite particles obtained were agitated with jet stream at 4000 rpm for 3 minutes, before surface-polished, thereby producing white EA particles being the inorganic and organic composite particles. The specific gravity of the produced EA particles was 1.157, the average diameter thereof was 13.7 μm. The EA particles were uniformly dispersed in a silicone oil (produced by TOSHIBA SILICONE Co., Ltd., TSF451 series) so that its ratio was 5.0% by weight, thus obtaining the white opaque EA fluid used in the first embodiment.

Preparation Example 2 (blue composition)

The difference of the preparation example 2 from the foregoing preparation example 1 is that a mixture of 32 g of a titanium hydroxide and 8 g of a copper phthalocyanine blue (produced by Dainichi Seika Kogyo Co., Ltd., cyanine blue S-32) being a blue pigment was used in place of the 40 g of titanium hydroxide. As well as the preparation example 1, the resultant inorganic and organic composite particles was stirred with jet stream and surface-polished, thereby obtaining blue EA particles. The average diameter of the EA particles was 14.0 μm. The EA particles were dispersed in a silicone oil in the same manner as the preparation example 1, with the result that a blue opaque EA fluid was obtained which is employed in the aforementioned second embodiment of the present invention.

Preparation Example 3 (black composition)

The difference of the preparation example 3 from the preparation example 1 is that a mixture of 20 g of a titanium hydroxide and 20 g of a black triiron tetraoxide ($Fe_3O_4$) being an electrical semiconductive inorganic matter was used in place of the 40 g of titanium hydroxide. As well as the preparation example 1, the resultant inorganic and organic composite particles was stirred with jet stream and surface-polished, thereby obtaining blackish gray EA particles. The average diameter of the EA particles was 15.4 µm. The EA particles were dispersed in a silicone oil in the same manner as the preparation example 1, with the result that a black opaque EA fluid was obtained.

Preparation Example 4 (red composition)

The difference of the preparation example 3 from the preparation example 1 is that 40 g of a ferric oxide ($Fe_2O_3$) being an electrical semiconductive inorganic matter was used in place of the 40 g of titanium hydroxide. As well as the preparation example 1, the resultant inorganic and organic composite particles was stirred with jet stream and surface-polished, thereby obtaining reddish orange EA particles. The average diameter of the EA particles was 13.9 µm. The EA particles were dispersed in a silicone oil in the same manner as the preparation example 1, resulting in obtaining a red EA fluid.

Preparation Example 5 (green composition)

In addition to a mixture of 32 g of a titanium hydroxide and 8 g of a copper phthalocyanine green being a green pigment, a mixture of 300 g of a butyl acrylate, 100 g of a 1, 3-butylene glycol dimethacrylate and a polymerization initiator was dispersed in 1800 ml of water containing a tertiary calcium phosphate as a dispersing stabilizer and suspension-polymerized while being agitated at a temperature of 60°C for one hour. The resultant product was stirred with jet stream and surface-polished as in the same manner as the preparation example 1, thereby producing green EA particles being the inorganic and organic composite particles. The average diameter of the produced EA particles was 16.4 µm. As well as the preparation example 1, the EA particles were uniformly dispersed in a silicone oil so that its ratio was 5.0% by weight, thus obtaining the green opaque EA fluid used in the fifth and sixth embodiments of the present invention.

Preparation Example 6 (yellow composition)

The difference of the preparation example 6 from the foregoing preparation example 5 is that a first yellow (NL first yellow 5G(S), produced by Dainichi Seika Kogyo Co., Ltd.) being a yellow pigment was used in place of the copper phthalocyanine green being a blue pigment. As well as the preparation example 1 or 5, the resultant inorganic and organic composite particles was stirred with jet stream and surface-polished, thereby obtaining yellow EA particles. The average diameter of the EA particles was 14.0 µm. The EA particles were dispersed in a silicone oil in the same manner as the preparation example 1 or 5, with the result that a yellow opaque EA fluid was obtained which is employed in the aforementioned fifth and sixth embodiments of the present invention.

Furthermore, a description will be made hereinbelow in terms of experimental examples of the EA fluid in the present invention.

Experimental Example 1

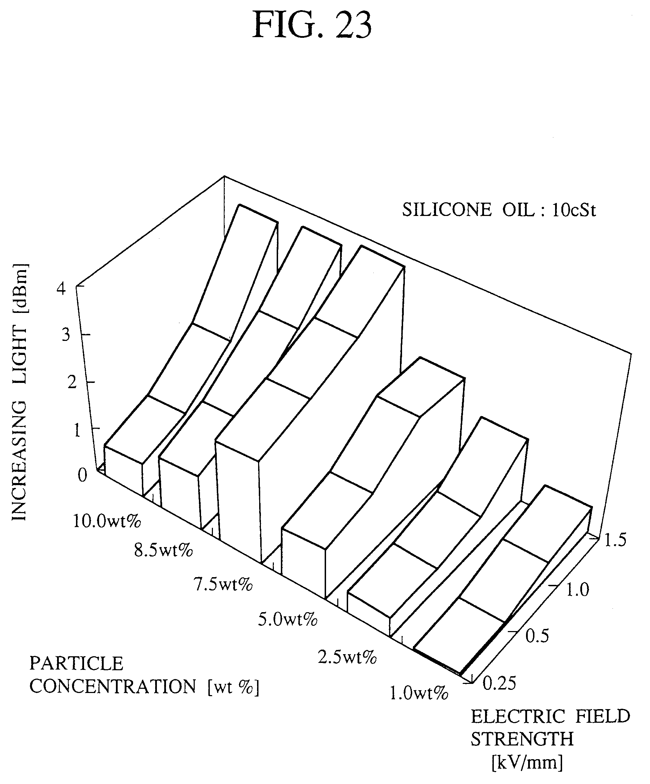

An experiment on the relationship between the electric field strength and transparency of the EA fluid was conducted as follows. That is, two pieces of ITO (indium tin oxide) glass having a thickness of 1.0 µm were prepared, and arranged in parallel and spaced by 2 µm from each other so that their ITO surfaces take opposed relation to each other. In addition, their circumferential portions was sealed with sealing member made of a resin to make up a cell which had an opening to pour the EA fluid which was produced basically in accordance with the foregoing preparation example 1 (25 g of tertiary calcium phosphate was used as a dispersing stabilizer) to have various inclusion quantities of the EA particles. After the various kinds of resultant EA fluids were put in the cell, while the electric field strength (kV/mm) to be applied to the ITO electrodes is changed, the strength of the light incident on the cell and the strength of the light passing therethrough were detected by means of optical sensors. The comparison values were expressed in dMm as the increase of light (increasing light). In this case, the increase by 3.2 dBm indicates the increase by 2.09 times in light power and the increase by 4.2 dBm means the increase by 2.63 times in light power. The measurement results are shown in Figs. 23 to 27.

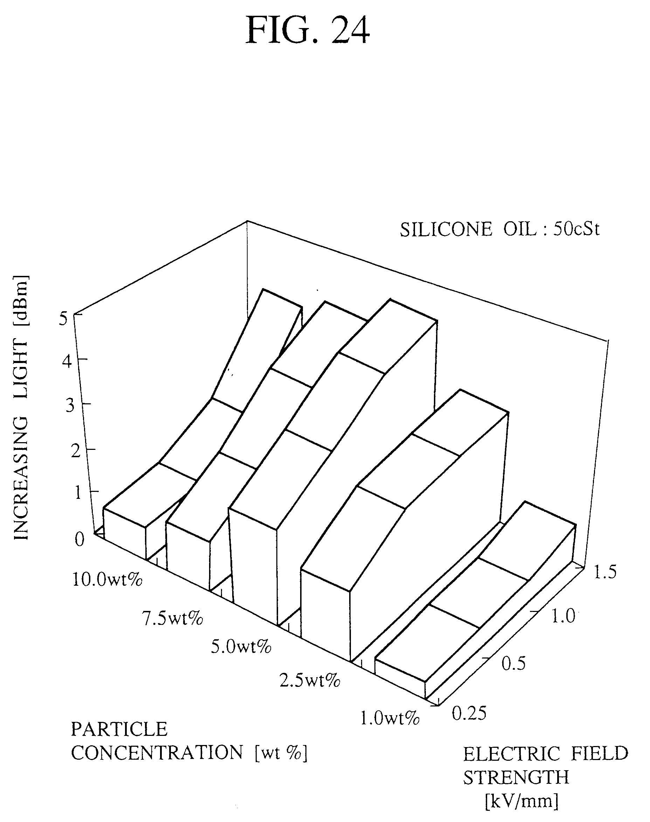

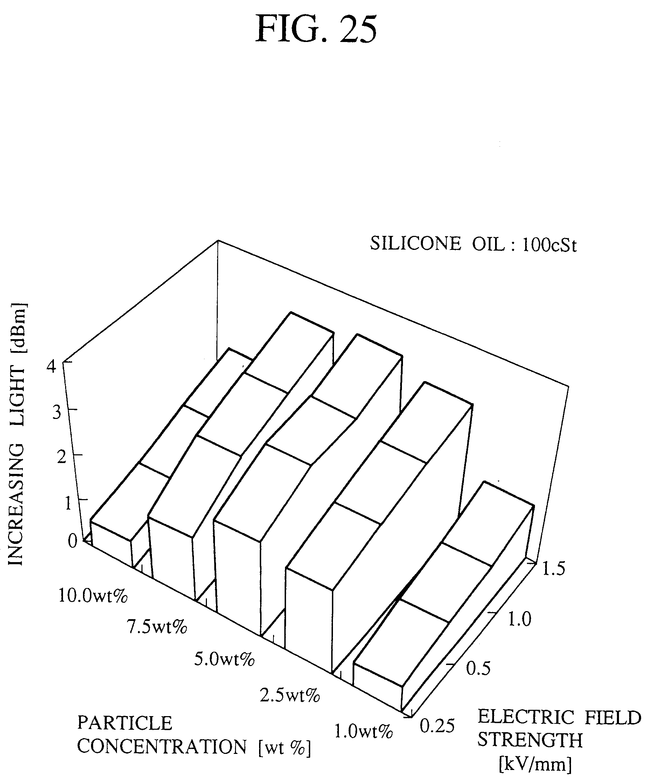

Fig. 23 shows the measurement results of the increasing light in accordance with the variations of the concentration (percent by weight) of the inorganic and organic composite particles and the applied electric field strength (kV/mm) in the case that the kinematic viscosity of the silicone oil (electrical insulating medium) was 10 cSt. Fig. 24 shows the experimental results thereof in the case that the kinematic viscosity of the silicone oil was 50 cSt, and Fig. 25 shows the experimental results thereof in the case that the kinematic viscosity of the silicone oil was 100 cSt.

From the results shown in Figs. 23 to 25, when the electric field strength varied from 0.25 kV/mm to 1.5 kV/mm at a given concentration, in every case the dBm value of the increasing light increased in accordance with the increase in the electric field strength. In other words, the transparency of the cell increased in accordance with the increase in the electric field strength between the electrodes. Thus, in the display device according to the present invention, the transparency/opaque control of the cell is possible through the on/off control of the electric field, besides the transparency is continuously or intermittently controllable by the variation of the electric field strength. The present invention includes a display device in which the transparency of each cell is controlled by the variation of the electric field strength. In the case that the particle concentration was 1.0% by weight, even if the electric field strength was 3 kV/mm, the increasing light ratio resulted in being small. For this reason, it is obvious that the particle concentration was preferable to be over 2.5% by weight.

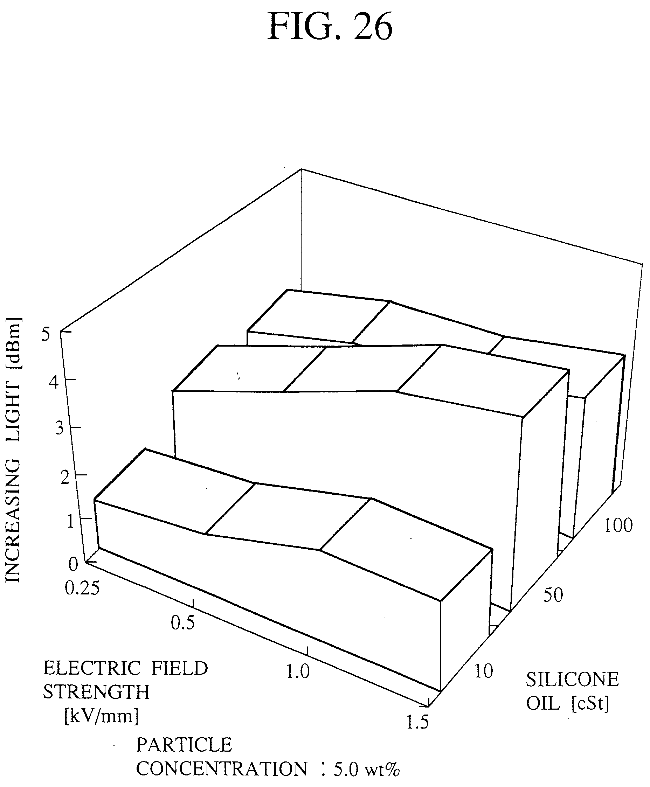

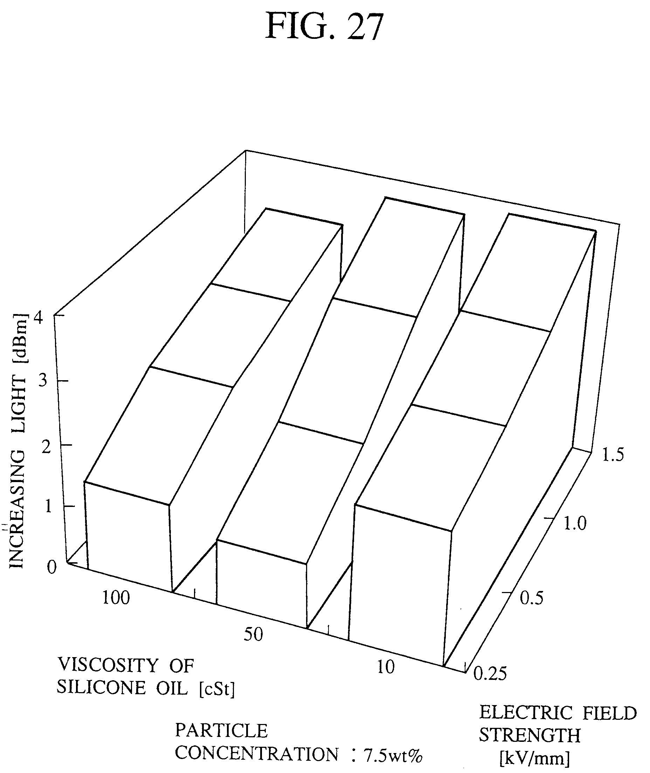

Fig. 26 shows the measurement results of the increasing light (dB) in accordance with the variation of the kinematic viscosity of the silicone oil and the electric field strength in the case that the particle concentration is fixed to 5.0% by weight. Further, Fig. 27 shows the experimental results thereof in the case that the particle concentration is fixed to 7.5% by weight. From the results shown in Figs. 26 and 27, even if the particle concentration was 5.0% by weight or 7.5% by weight, when the kinematic viscosity of the silicone oil (electrical insulating medium) was in the range of 10 cSt to 100 cSt, the controllable range of the transmitted light intensity became at a maximum.

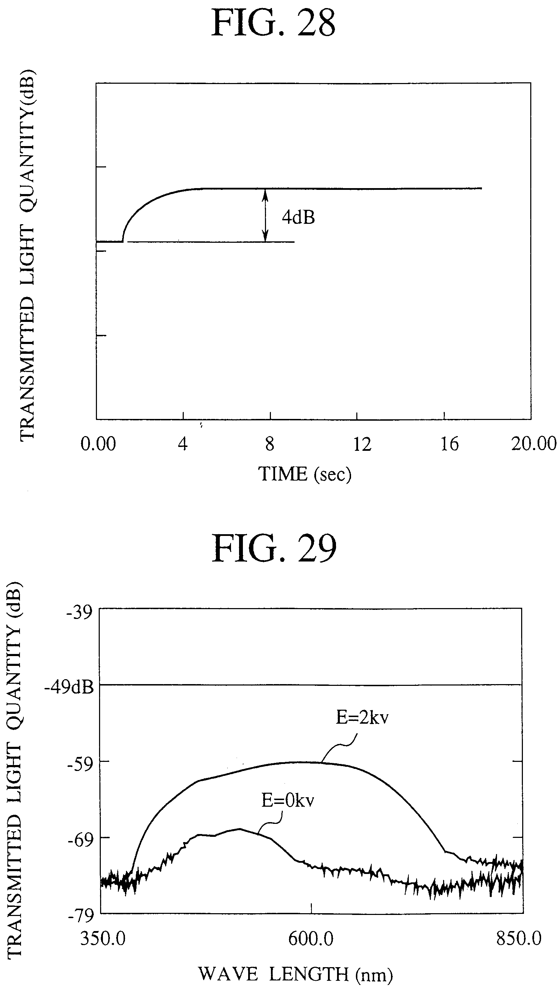

Secondly, a description will be made about the experimental examples on the electric field responsibility. The EA fluid, in which 7% by weight of inorganic and organic composite particles are dispersed in a silicone oil whose kinematic viscosity is 10 cSt, is packed in the aforementioned cell and an electric field is applied thereto. In this state, the variation of the transmitted light intensity is measured with time. The measurement results are shown in Fig. 28. In Fig. 28, the electric field was applied thereto when about one second was elapsed after the start of the measurement. From the Fig. 28 results, in this EA fluid, the transmitted light intensity started to increase immediately after the application of the electric field and reached a maximum of transmitted light intensity after elapse of 3 to 4 seconds before coming into a stable state.

Fig. 29 illustrates the relationship between the transmitted light intensity and the wavelength in the case that the transmitted light intensity was measured using the EA fluid in which 4% by weight of EA particles colored in blue were dispersed in a silicone oil having a kinematic viscosity of 10 cSt. For the coloring the EA particles, 20% by weight of the inorganic EA matter for constituting the surface layers was substituted by a blue pigment during the production of the EA particles. In the illustration, the curve of E = 0 kV indicates the transmission wavelength spectrum at no application of the electric field, and the curve of E = 2 kV indicates the transmission wavelength spectrum at application of the electrical potential of 2 kV to the electrodes. As obvious from the comparison between both the curves in Fig. 29, the flue EA fluid allows much transmission of blue light with a short wavelength at no application of the electric field, while permits light transmission in a wide wavelength range at application of the electric field, in other words, the EA fluid turns from the blue-colored state into the transparent state.

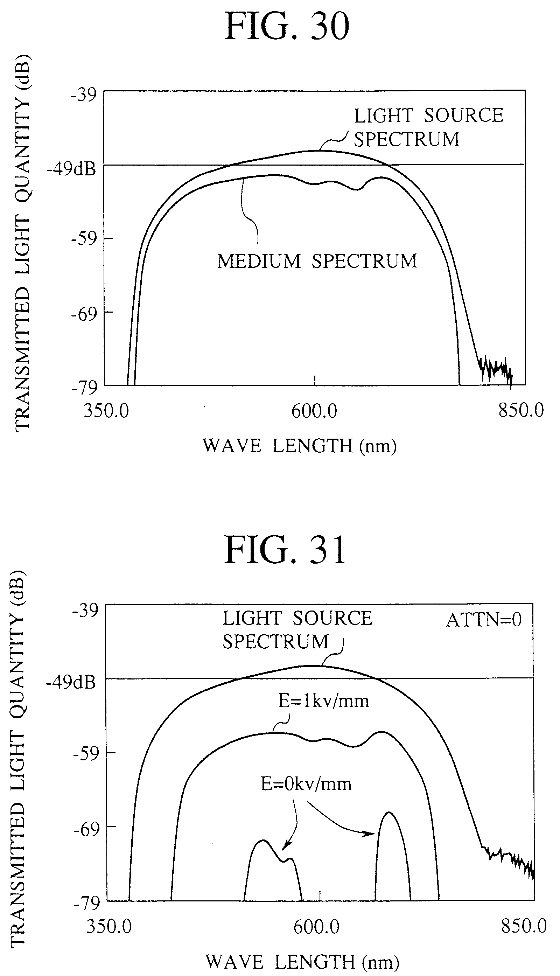

Fig. 30 shows the transmitted light spectrums obtained by the measurement of the transmitted light intensity of only an electrical insulating medium (not including the EA particles) made of a dimethyl silicone oil containing 0.1% by weight of a blue dye. This electric insulating medium appears to be light blue when being seen with the naked eye. In Fig. 30, comparing the light source spectrum with the medium spectrum, the light absorption occurred at portions other than the blue spectrum portion of short wavelengths. It is obvious from this that the electrical insulating medium is blue in color.

Fig. 31 shows the transmitted light spectrums obtained by the measurement of the transmitted light intensity of the EA fluid in which 5% by weight of yellow-colored EA particles are dispersed in an electrical insulating medium made of a dimethyl silicone oil containing 0.1% by weight of a blue dye. The coloring of the inorganic and organic composite particles was done in the same manner as in the aforementioned example except for use of a yellow pigment. Shown in Fig. 31 are a light source spectrum, transmitted light spectrum at E = 0 kV/mm, and transmitted light spectrum at E = 1 kV/mm. From the illustration, the EA fluid is opaque and greenish yellow being the mixed color of flue and yellow at no application of the electric field thereto, while turning into a blue transparent state close to colorless transparency at application of the electric field thereto. Accordingly, the EA fluid can take various color variations including transparent states in different color, transparent states in same color and colorless transparent states.

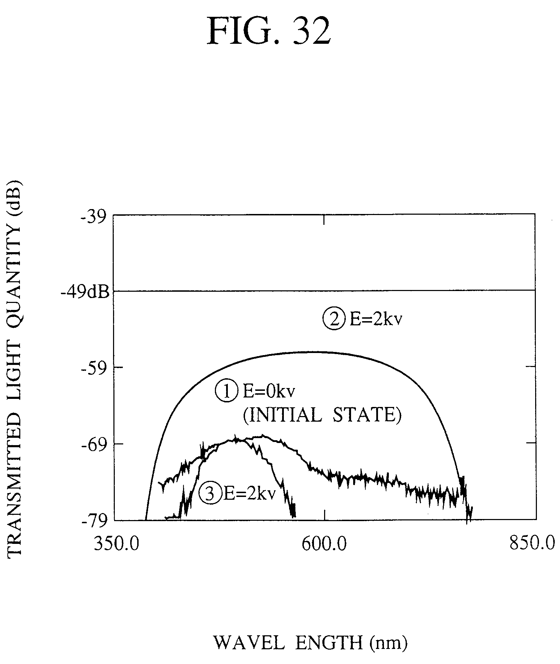

Fig. 32 shows the states in the case that the EA fluid obtained by adding 4% weight of EA particles being blue-colored inorganic and organic composite particles into an electrical insulating medium being a silicone oil having a kinematic viscosity of 10 cSt is put in the cell of the picture element in the foregoing ninth embodiment in which the comb-like transparent reference electrode 292 and the transparent adjacent electrode 292c adjacent thereto are formed on one transparent surface 291a and the facing electrode 292b is formed on the other transparent surface 291b, and the switch 293 is changed over. In Fig. 32, a curve (1) indicates a transmitted light spectrum in a state where no electric field is applied to any electrode, a curve (2) shows a transmitted light spectrum in a state in which an electric field of 2 kV is applied to between the reference electrode 292a and the facing electrode 292b by means of the operation of the switch 293, and a curve (3) indicates a transmitted light spectrum in a state where an electric field of 2 kV is applied to between the reference electrode 292a and the adjacent electrode 292c through the change-over operation of the switch 293. As obvious from the curve (1), the EA particles randomly float and disperse at no application of the electric field so that the EA fluid becomes opaque in the measurement wavelength band. Further, as obvious from the curve (2), in response to application of an electric field to between the reference electrode 292a and the facing electrode 292b, the EA particles are aligned in directions perpendicular to the transparent surface 291a, with the result that light can pass thereinto over a wide wavelength band. Moreover, as obvious from the curve (3), in response to application of an electric field to between the reference electrode 292a and the adjacent electrode 292c on the same surface, the EA particles are aligned in parallel to this surface so that light is inhibited to pass thereinto. That is, the transmittance of light is quickly changeable through the variation of the application of the electric field to between the electrodes.

The following Tables 1 and 2 show the measurement results[dBm] of transmitted light at every wavelength according to the variation of the electric field strength in the case that 5.0% by weight of EA particles are dispersed in a silicone oil (electrical insulating medium) whose kinematic viscosity is 50 cSt. In this case, the average increasing light becomes 4.2 dBm.

Table 1

| Electric Field Strength[kV/mm] | Measurement Wavelength[nm] | | | | | | | |
|---|---|---|---|---|---|---|---|---|
| | 400 | 500 | 600 | 700 | 800 | 900 | 1000 | 1100 |
| Initial State | -18.4 | -19.5 | -20.7 | -21.5 | -22.1 | -22.5 | -22.6 | -16.9 |
| 0 | 0.53 | -0.61 | -1.76 | -2.59 | -3.13 | -3.55 | -3.69 | 2.09 |
| 0.25 | 2.66 | 1.50 | 0.34 | -0.51 | -1.00 | -1.41 | -1.54 | 4.22 |
| 0.5 | 3.50 | 2.37 | 1.25 | 0.39 | -0.16 | -0.55 | -0.70 | 5.02 |
| 1.0 | 4.38 | 3.25 | 2.12 | 1.25 | 0.69 | 0.30 | 0.18 | 5.93 |
| 1.5 | 4.72 | 3.63 | 2.48 | 1.64 | 1.08 | 0.72 | 0.60 | 6.36 |

Table 2

| Values at 1.5[kV/mm] | 4.72 | 3.63 | 2.48 | 1.64 | 1.08 | 0.72 | 0.60 | 6.36 |
|---|---|---|---|---|---|---|---|---|
| Values at -)0[kV/mm] | 0.53 | -0.61 | -1.76 | -2.59 | -3.13 | -3.55 | -3.69 | 2.09 |
| Increasing Light[dBm] | 4.19 | 4.24 | 4.24 | 4.23 | 4.21 | 4.27 | 4.29 | 4.27 |

From the results shown in the Tables 1 and 2, in the image control of the display device in the present invention, uniform light transmission property is obtainable over a wide wavelength range of 400 to 1100 nm, and uniform color tone adjustment is possible over a wide wavelength area. The visible light has a wavelength range of 480 to 780 nm, and it includes the visible light and the infrared area longer in wavelength than the visible light. Thus, the transmitted light control of the device according to the present invention can cover a wide wavelength range.

In color display devices according to the present invention, the opposed electrode layers are formed in a cell having a transparent surface and an opaque surface and a colored EA fluid is packed in the cell, and the color of the EA particles is different from the opaque section and an electrical insulating medium. When an electric field is not applied to the EA fluid, the color of the EA particles appears at the display section, and on the other hand, when the electric field is applied thereto, the color of the opaque section (and the electrical insulating medium) appears thereat. This arrangement can provide a reflection type color display device in which the color of its display surface is changeable. If a plurality of cells are used in piles, the color display device can take the color variation of the number of the cells plus 1 at the same section. In addition, since this display device is of the reflection type, the visibility is excellent so that the image is visible even at a light place, and its electrically driven mechanism can suppress the generation of the noises and troubles.

Furthermore, if the cell has the facing electrode layer and non-facing electrode layer in addition to the reference electrode layer, the quick color variation is possible in response to the on/off control of the electric field.

Still further, in color display devices according to the present invention, each picture element has a plurality of cells arranged in parallel to each other and each cell has a colored opaque surface acting as a non-display surface and having a color different from black. When an electric field is applied to between its electrodes of a cell, only the cell shows a color other than black.

Moreover, in color display devices according to the present invention, each picture element has a plurality of cells placed in piles, and the EA particles of the EA fluid included within the cell making up a display section are colored in black, while the EA particles of the EA fluids provided in the other cells and the colored opaque plate of the lowermost cell are colored to have different colors other than black. Accordingly, the picture element shows colors other than black in response to the on/off control of the electric field, thus providing a reflection type large-sized color display device in which the image is changeable.

In addition, one surface of a cell is equipped with the reference electrode and adjacent electrode, and an electric field is applied to between these electrodes or between these electrodes and the facing electrode. Through the switching control of the electric field, the EA fluid immediately takes variation between the transparent state and the opaque state, thus providing a reflection type large-sized color display device with an excellent electric field responsibility.

It should be understood that the foregoing relates to only preferred embodiments of the present invention, and that it is intended to cover all changes and modifications of the embodiments of the present invention herein used for the purpose of the disclosure, which do not constitute departures from the spirit and scope of the present invention.

## Claims

1. A color display device comprising a cell (3), characterized in that said cell (3) including:

   first and second surfaces (1a, 1b) disposed in opposed relation to each other, at least a portion of said first surface (1a) being transparent to make up a transparent section and said second surface (1b) being opaque to make up an opaque section;

   first and second transparent electrode layers (5, 6) formed on said transparent section and said opaque section, respectively; and

   an electro-optical fluid composition (4) produced by putting solid particles (42) with an electric alignment effect in an electrical insulating medium (41) and packed in between said first and second transparent electrode layers (5, 6).

2. A color display device as set forth in claim 1, characterized in that one or more cells (23) are placed on said transparent section of said first-mentioned cell (3), each of said second-mentioned cells (23) having transparent surfaces (21a, 21b) disposed in opposed relation to each other, said second-mentioned cell (23) including:

   first and second transparent electrode layers (25, 26) formed on said transparent surfaces (21a, 21b), respectively; and

   an electro-optical fluid composition (24) produced by putting solid particles (42a) with an electric alignment effect in an electrical insulating medium and packed in between said first and second transparent electrode layers (25, 26),

   wherein said solid particles (42a) within at least one of said first-mentioned and second mentioned cells (3, 23) are different in color from said opaque section of said first-mentioned cell (3).

3. A color display device as set forth in claim 1 or 2, characterized by further comprising an electrode layer (55) formed on said opaque section to be not in opposed relation to said first electrode layers (5, 53).

4. A color display device as set forth in any one of claims 1 to 3, characterized in that each of said solid particles (42, 42a) is composed of a core body (43) made of a polymer compound and a surface layer (45) formed on said core body (43) and made of at least an inorganic matter having said electric alignment effect.

5. A color display device as set forth in any one of claim 1 to 4, wherein said solid particles (42, 42a) are responsible to an electric field generated between said first and second transparent electrode layers (5,6, 25, 26) to make said electro-optical fluid composition (4, 24) transparent.

6. A color display device characterized by comprising at least one color display section composed of a one-surface transparent cell (113) having a first surface (111a) transparent and a second surface (111b) opaque, said first and second surfaces (111a, 111b) being spaced from each other and disposed in opposed relation to each other, said one-surface transparent cell (113) including:

   a transparent reference electrode layer (115) formed on one of said first and second surfaces (111a, 111b);

   a transparent facing electrode layer (116) formed on the other of said first and second surfaces (111a, 111b) so as to be in opposed relation to said reference electrode layer (115);

   electric field applying means (117, 118) for applying an electric field to between said reference electrode layer (115) and said facing electrode layer (116); and

an electro-optical fluid composition (114) produced by putting solid particles (142) with an electric alignment effect in an electrical insulating medium (141) and packed in between said reference electrode layer (115) and said facing electrode layer (116), said solid particles (142) being responsive to said electric field from said electric field applying means (117, 118) so that said electro-optical fluid composition (114) takes a transparent state and an opaque state.

7. A color display device as set forth in claim 6, characterized in that one or more double-surface transparent cells (123) are placed on said transparent surface (111a) of said one-surface transparent cell (113), each of said double-surface transparent cells (123) having transparent surfaces (121a, 121b) disposed in opposed relation to each other, said double-surface transparent cell (123) including:

transparent reference and facing electrode layers (125, 126) formed on said transparent surfaces(121a, 121b), respectively;

electric field applying means (127, 128) for applying an electric field to between said reference and facing electrode layers (125, 126) of said double-surface transparent cell (123); and

an electro-optical fluid composition (124) produced by putting solid particles with an electric alignment effect in an electrical insulating medium and packed in between said first and second transparent electrode layers (125, 126), said solid particles being responsive to said electric field from said electric field applying means (127, 128) so that said electro-optical fluid composition (124) takes a transparent state and an opaque state,

wherein said solid particles of at least one of said one-surface transparent cell (113) and said double-surface transparent cell (123) are different in color from said opaque surface of said one-surface transparent cell (113).

8. A color display device as set forth in claim 6 or 7, characterized in that one or more non-facing electrode layer (155) are provided to be not in opposed relation to said reference electrode layer (115, 125, 153, 153b) of said one-surface transparent cell (113, 151), and said electric field applying means (117, 118, 127, 128, 156, 157, 159) selectively applies said electric field to one of a section between said reference electrode layer (115, 125, 153, 153b) and said facing electrode (116, 126, 154, 154b) and a section between said reference electrode layer (115, 125, 153, 153b) and said non-facing electrode layer (155).

9. A color display device as set forth in any one of claims 6 to 8, characterized in that said solid particles (142) are inorganic and organic composite particles each being composed of a core body (143) made of a polymer compound and a surface layer (145) formed on said core body (143) and made of at least an inorganic matter having said electric alignment effect, and at least one of said core body (143) and said surface layer (145) is colored.

10. A color display device characterized in that a picture element (201) having at least two or more cells (210, 220, 230, 240) arranged in parallel to each other on one plane to be adjacent to each other, each (210) of said cells (210, 220, 230, 240) including:

first and second surfaces (211a, 211b) disposed in opposed relation to each other, said first surface (211a) being composed of a transparent plate to make a portion of a display surface of said picture element (201) and said second surface (211b) composed of an opaque plate colored to have a color different from black and further different from colors of the other cells (220, 230, 240);

a transparent reference electrode (212a) formed on one of said first and second surfaces (211a, 211b);

a transparent facing electrode (212b) formed on the other of said first and second surfaces (211a, 211b) so as to be in opposed relation to said reference electrode (212a);

electric field applying means (202, 215) for applying an electric field to between said reference electrode (212a) and said facing electrode (212b); and

an electro-optical fluid composition (214) produced by putting solid particles (213) with an electric alignment effect in an electrical insulating medium and packed in between said reference electrode (212a) and said facing electrode (212b), said solid particles (213) being responsive to said electric field from said electric field applying means (202, 215) and colored to have a color different from black.

11. A color display device characterized by comprising a picture element (207) having at least two or more cells (250, 260, 270, 280) placed in piles to construct a laminated structure, one (250) of said cells (250, 260, 270, 280) being a one-surface transparent cell having first and second surfaces (251a, 251b) disposed in opposed relation to each other, said first surface (251a) being composed of a transparent plate and said second surface (251b) composed of a colored opaque plate, and other cells (260, 270, 280) being double-surface transparent cells each having first and second transparent surfaces disposed in opposed relation to each other, said double-surface cells (260, 270, 280) being placed on said one-surface cell (250), each (250) of said cells (250, 260, 270, 280) including:

a transparent reference electrode (252a) formed on one of said first and second surfaces (251a, 251b);

a transparent facing electrode (252b) formed on the other of said first and second surfaces (251a, 251b) so as to be in opposed relation to said reference electrode layer (252a);

electric field applying means (202, 255) for applying an electric field to between said reference electrode (252a) and said facing electrode (252b); and an electro-optical fluid composition (254) produced by putting solid particles

(253) with an electric alignment effect in an electrical insulating medium and packed in between said reference electrode (252a) and said facing electrode (252b),

wherein said solid particles (253) of said electro-optical fluid composition (254) within the uppermost cell (280) are colored in black and said solid particles (253) of said electro-optical fluid composition (254) within said cells (250, 260, 270) other than the uppermost cell (280) are colored to have colors different from each other and different from black, a color of said colored opaque plate being different from the colors of said solid particles (253) of said electro-optical fluid compositions (254).

12. A color display device as set forth in claim 10 or 11, characterized in that a transparent adjacent electrode (292c) is formed on the surface (291a) including said reference electrode (292a) in each of said cells (290) to be adjacent to said reference electrode (292a), said electric field applying means (202, 293) selectively applies said electric field to one of a section between said reference electrode (292a) and said facing electrode (292b) and a section between said reference electrode (292a) and said adjacent electrode (292c).

13. A color display device as set forth in claim 10 or 11, characterized in that said solid particles (253, 263, 273, 283) are inorganic and organic composite particles each being composed of a core body made of a polymer compound and a surface layer formed on said core body and made of at least an inorganic matter having said electric alignment effect.

# FIG. 1A

# FIG. 1B

# FIG. 2

# FIG. 3

# FIG. 4

# FIG. 5

# FIG. 6

# FIG. 7

# FIG. 8

# FIG. 9

# FIG. 10

W

103     102

103     103     103

104a

104b

103

103     105

103     106

103     104c

103     104d

||||| RED     YELLOW □ GREEN

# FIG. 11

# FIG. 12

# FIG. 13

# FIG. 14A

# FIG. 14B

# FIG. 15A

209   209   209

208

Autumn Traffic Safety Week

From October 1 to 7

The Metropolitan
Police Department

A

# FIG. 15B

A

201   201

# FIG. 16A

# FIG. 16B

# FIG. 17A

201

210

211a (RED)

221a (BLACK)

220

X — · — · — X'

231a (BLACK)

230

241a (BLACK)

240

# FIG. 17B

215    211a  212a  216          222a          225

213          223  221a

210                                      220

212b 214 224 222b

211b (RED)

202

221b (BLUE)

# FIG. 18

# FIG. 19

# FIG. 20

# FIG. 21

# FIG. 22A

# FIG. 22B

# FIG. 23

# FIG. 24

# FIG. 25

SILICONE OIL : 100cSt

INCREASING LIGHT [dBm]

4

3

2

1

0

10.0wt%

7.5wt%

5.0wt%

2.5wt%

1.0wt%

PARTICLE
CONCENTRATION [wt %]

0.25

0.5

1.0

1.5

ELECTRIC FIELD
STRENGTH
[kV/mm]

# FIG. 26

# FIG. 27

INCREASING LIGHT [dBm]

4
3
2
1
0

VISCOSITY OF
SILICONE OIL [cSt]

100
50
10

1.5
1.0
0.5
0.25

PARTICLE
CONCENTRATION : 7.5wt%

ELECTRIC FIELD
STRENGTH
[kV/mm]

# FIG. 28

# FIG. 29

# FIG. 30

# FIG. 31

# FIG. 32

| | European Patent Office | EUROPEAN SEARCH REPORT | Application Number<br>EP 95 11 5166 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| A | SID INTERNATIONAL SYMPOSIUM DIGEST OF TECHNICAL PAPERS,<br>vol.XIX, 24 May 1988, ANAHEIM, CA, US<br>pages 61 - 62<br>S. SHIWA ET AL. 'Electrophoretic Display Method Using Ionographic Technology'<br>* see also figure on page 488 *<br>* the whole document *<br>--- | 1,4-6,9,10 | G02F1/17<br>G02F1/19<br>G09F9/37 |
| A | DE-A-25 05 059 (PLESSEY HANDEL UND INVESTMENTS AG)<br>* page 2, line 30 - page 9, line 26; figures 1-8 *<br>--- | 1,4-6,9 | |
| A | ELECTRONIC DESIGN,<br>vol.41, no.1, 7 January 1993, CLEVELAND, OH, US<br>pages 36 - 38<br>D. BURSKY 'Flat-Panel Technology Advances Promise Lower-Cost, Better Displays'<br>* the whole document *<br>--- | 1,4-6,9 | |
| A | JOURNAL OF APPLIED PHYSICS,<br>vol.73, no.2, 15 January 1993, NEW YORK, US<br>pages 489 - 493<br>H. TADA ET AL. 'A novel switchable glazing formed by electrically induced chains of suspensions'<br>* page 489, right column, line 15 - page 490, right column, line 19; figure 1 *<br>----- | 1,4-6,9 | TECHNICAL FIELDS SEARCHED (Int.Cl.6)<br><br>G09F<br>G02F |

The present search report has been drawn up for all claims

| Place of search | Date of completion of the search | Examiner |
| --- | --- | --- |
| BERLIN | 30 January 1996 | Taylor, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)